**Europäisches Patentamt**

**European Patent Office**

**Office européen des brevets**

(19)

(11) **EP 1 215 623 A2**

(12) **EUROPEAN PATENT APPLICATION**

| | |
|---|---|
| (43) Date of publication:<br>**19.06.2002 Bulletin 2002/25** | (51) Int Cl.7: **G06N 3/00**, G06N 3/12 |

(21) Application number: **01129870.0**

(22) Date of filing: **14.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **15.12.2000 JP 2000382449**
**27.12.2000 JP 2000399415**

(71) Applicants:
• **Olympus Optical Co., Ltd.**
**Tokyo (JP)**
• **Mitsui Knowledge Industry Co. Ltd.**
**Tokyo (JP)**

(72) Inventors:
• **Suyama, Akira**
**Hachioji-shi, Tokyo (JP)**
• **Sakakibara, Yasubumi**
**Hachioji-shi, Tokyo (JP)**
• **Morimoto, Nobuhiko**
**Hachioji-shi, Tokyo (JP)**

(74) Representative:
**Winter, Brandl, Fürniss, Hübner, Röss, Kaiser,**
**Polte Partnerschaft**
**Patent- und Rechtsanwaltskanzlei**
**Alois-Steinecker-Strasse 22**
**85354 Freising (DE)**

(54) **Novel computation with nucleic acid molecules, computer and software for computing**

(57) The present invention is to provide a molecular computer comprising an electronic operation section (21) and a molecular operation section (22), wherein, in addition to general computation processing, said electronic operation section (21) controls a function of the molecular operation section (22) substantially, and the molecular operation is performed under control thereof.

FIG. 1

EP 1 215 623 A2

**Description**

The present invention relates to a novel computation method using a nucleic acid molecule, a computer, and software for computing.

Computers using semiconductor silicon have been improved in performance since their entry, and greatly contributed to mankind by carrying out complicated calculations at a low cost. The computers using semiconductor silicon are usually classified into a Neumann type which employs binary digits, 0 and 1, to perform a calculation.

In the field of computer science, there is a well-known investigation subject called a "NP-complete problem" which includes a "traveling salesman problem" and predicting a three-dimensional structure of a protein. To solve such problems completely, the following two approaches have been hitherto employed. In one of the approaches, all possible solutions are fit to a problem and whether they solve the problem is checked out. In the other approach, an approximate solution is obtained to solve the problem.

In the former approach, much time is required for calculation to obtain a solution. Actually, the calculation time increases exponentially in proportion to the scale (complexity) of the problem. The latter approach is originally proposed to perform such a calculation at a high speed. Several algorithms have been proposed to obtain the approximate solution. However, it may not be possible to obtain an exact solution by using these algorithms. If anything, there is a danger that the right solution may be overlooked.

When the former approach is employed, calculations must be performed for all possible solutions. To perform the calculations at a high speed by use of presently available technique, numerous computers may be arranged in parallel and simultaneously operated. However, this method accompanies the following problems. If the number of computers increases, power consumption inevitably increases, and further, a larger space is required for installing a large number of computers. To arrange numerous computers in parallel, many technical problems may arise, including how to transmit data between computers, and how to connect the computers with each other, etc.

On the other hand, to solve the problem which has not yet been clarified by the Neumann type computer, a new computer paradigm called "DNA computing" was proposed by Adleman in 1994 (Science, 266, 1021-4).

Adleman employed DNA molecules to solve a small-scale traveling salesman problem. More specifically, the DNA molecules were constructed so as to correspond to a travelling route, and the DNA corresponding to the solution was selected from the DNA molecules thus constructed. Guanieri has reported another method in which DNA molecules are used to perform an add operation (Science, 273, 220-3). As described above, investigation has been performed as to the possibility of using DNA molecules in calculation.

It has been known that the following advantages are obtained if DNA is used in a calculation. For example, 1 pmol (=10-12 mol) of short DNA molecules, each consisting of several tens of nucleotides, can be easily dissolved in 100 μL of buffer solution. Besides, the number of the short DNA molecules contained in the buffer solution reaches about $6 \times 1011$. Assuming that the large number of DNA molecules interact upon each other to form DNA molecules corresponding to solutions, an extremely larger number of values can be calculated in parallel as compared to a conventional computer to obtain a desired solution. The interaction of DNA molecules takes place even in a solution of less than 1 mL. Therefore, even if a heating/cooling is applied to the solution of less than 1 mL, the energy consumption is little. If such a DNA computer is applied to solve a big problem with multi-variables, the processing speed of the DNA computer may exceed that of the Neumann type computer. Unfortunately, up to present, a DNA computer of practical use, efficiently using DNA molecules in calculation has not yet been developed.

Under the circumstances mentioned above, an object of the present invention is to provide a computation performed by a molecular computer, which is capable of evaluating a logical equation at a higher speed than a conventional electronic computer by use of parallelism of molecular operation and which is applicable to a reaction and a molecular computation.

The object of the present invention can be performed by the following procedure, which is a molecular computation method for performing a molecular computation by a chemical reaction of a molecule comprising:

converting a program described by variables, constants and functions into a series of control commands for driving a reaction control section (22) which performs reaction control of chemical reaction of molecules which correspond to operational reaction of the coding molecules, thereby generating control command procedures, wherein the variables and the constants being defined to be associated with coding molecules obtained by coding molecules based on nucleic acid sequences, and the functions being defined to be associated with operational reaction of the coding molecules;
outputting the control command procedures; and
performing reaction control of chemical reaction of molecules based on the control command procedures.

The reaction control used here includes control of an operation causing reaction (such as PCR reaction) and control of an additional operation causing reaction (such as mixing). With this method, it is possible to perform parallel computation processing at a higher speed than a conventional electronic computer.

In addition, with such a method, for example, it is possible to determine a genotype or a state of gene expression, and the like.

Further, another object of the present invention is to provide a computer to perform the above method. The above described problem is solved by the following means. That is, there is provided a molecular computer comprising an electronic operation section and a molecular operation section, in which the electronic operation section substantially controls a function of the molecular operation section in addition to general computation processing, and operation caused by a molecule is carried out under the control.

Such apparatus is effective as a molecular computer which performs advantageous super parallel computation for solving a difficult mathematical problem such as an NP-complete problem at a high speed. Of course, this apparatus is available for use in gene analysis.

In addition, the above described method and apparatus are compatible as an execution planning approach for preparing a plan for performing molecular computation as well as a problem available for use in an electronic operation section which implements such method or apparatus or a program product.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram showing a molecular computer of the present invention;

FIG. 2A is a flow chart showing processing using a molecular computation method of the present invention;

FIG. 2B to FIG. 2F are flow charts showing a modified example of processing using the molecular computation method;

FIG. 3 is a block diagram showing the molecular computer of the present invention;

FIG. 4 is a data flow chart of the molecular computation method;

FIG. 5 is a view showing an example of a procedure or function-operational reaction conversion data table;

FIG. 6 is a view showing an example of an operational reaction procedure table;

FIG. 7 is a view showing an example of a execution procedure table;

FIG. 8 is a view showing an example of a control command procedure table;

FIG. 9 is a schematic diagram showing arrangement of each section of the molecular computer of the present invention;

FIG. 10 is a flow chart showing an outline of command processing;

FIG. 11 is a flow chart showing an outline of command processing;

FIG. 12 is a flow chart showing an outline of command processing;

FIG. 13 is a flow chart showing an outline of command processing;

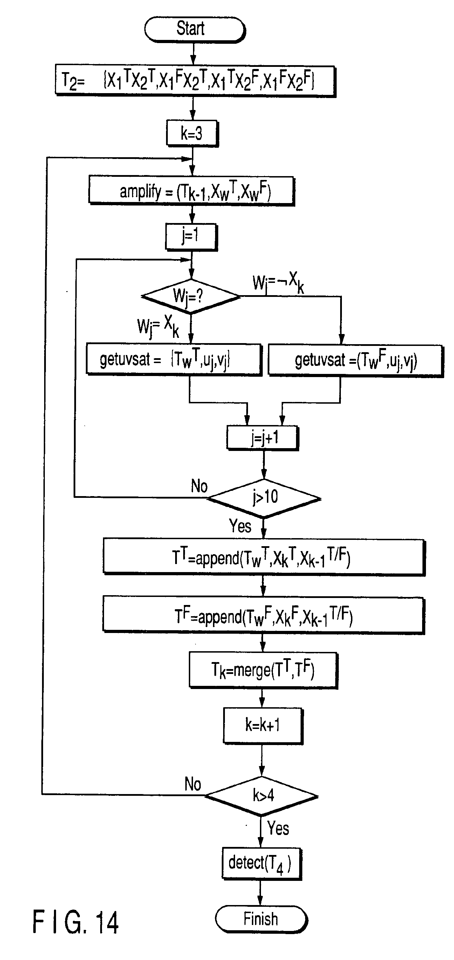

FIG. 14 is a flow chart showing a program flow;

FIG. 15 is a conceptual view showing an example of a sequence identification method;

FIG. 16 is a chart showing the results of sequence identification;

FIG. 17A to FIG. 17I are flow charts each showing an encode reaction and a decode reaction for gene analysis;

FIG. 18A and FIG. 18B are views each showing an exemplary molecule design for gene analysis;

FIG. 19 is a schematic view showing the states of molecules in the reaction step of detecting the gene;

FIG. 20 is a schematic view showing the states of molecules in a reaction system where a target is present;

FIG. 21 is a schematic view showing the states of molecules in the step of capturing a strand with streptoavidin-bonded magnetic beads;

FIG. 22 is a schematic view showing the states of molecules in the step of extracting DCNi.

FIG. 23 is a schematic view showing amplification of a sequence complementary to DCNi obtained by the extraction step;

FIG. 24 is a schematic view showing the states of molecules in the step of capturing the amplified product obtained by the amplification step shown in FIG. 23;

FIG. 25 is a schematic view showing the states of molecules in the step of dissociating the double strand into single strands by heat denaturation;

FIG. 26 is a schematic view showing behavior of each molecule in the step of representing the information that a certain gene is expressed and present, by a presence molecule;

FIG. 27 is a schematic view showing the reaction of a presence/absence representing inverted oligonucleotide and the presence molecule, in the initial step of detecting an unexpressed gene and representing it into an absence molecule;

FIG. 28 is a schematic view showing the state of the inverted oligonucleotide for use in detecting the unexpressed gene;

FIG. 29 is a schematic view showing the state of the inverted oligonucleotide in the extraction step;

FIG. 30 is a schematic view showing the state of the inverted oligonucleotide and DCNk* in the step of capturing DCNk* by the streptoavidin-bonded magnetic beads and extracting a desired gene with hybridization;

FIG. 31 is a schematic view showing an operational nucleic acid;

FIG. 32 is a schematic view showing the state of the operational nucleic acid and DCN3, in the hybridization step with a presence molecule, and an absence molecule;

FIG. 33 is a schematic view showing the state of the operational nucleic acid in the step of extending the presence molecule hybridized with the operational nucleic acid, after the step of FIG. 32;

FIG. 34 is a schematic view showing the states of molecles in the step of detecting calculation results by marker oligonucleotides M1 and M2;

FIG. 35 is a schematic view showing the states of molecules in the step of extracting and recovering the absence molecules for amplifying it;

FIG. 36 is a schematic view showing the states of molecules in the PCR amplification step for the absence molecule;

FIG. 37 is a schematic view showing the states of molecules in the step of capturing the amplified product produced in the step of FIG. 36;

FIG. 38 is a schematic view showing the states of molecules in the step of dissociating a single strand of the amplified product recovered in the step of FIG. 37;

FIG. 39 is a schematic view showing the states of molecules and the absence molecule in the step of hybridizing the absence molecule to the single strand obtained in the step of FIG. 38; and

FIG. 40 is a schematic view showing a complementary ligation nucleic acid and a part of the operational nucleic acid to be ligated for use in preparing a random library for the operational nucleic acid.

In one aspect of the present invention, a computer for performing an information processing method using a nucleic acid is disclosed.

The "nucleic acid" used here includes all DNAs and RNAs including cDNA, genome DNA, synthetic DNA, mRNA, total RNA, hnRNA, and synthetic RNA; and artificial synthetic nucleic acids such as a peptide nucleic acid, a morpholine nucleic acid, a methyl phosphonate nucleic acid, and an S-oligo nucleic acid. In addition, the "nucleic acid", "nucleic acid molecule", and "molecule" can be exchangeably used herein.

Hereinafter, the present invention will be described with reference to Examples.

I. Molecular Computer

1. General outline

In accordance with preferred embodiments of the present invention, a computer for performing an information processing method using nucleic acids is provided. Such computer is a molecular computer comprising an electronic operation section and a molecular operation section, wherein the electronic operation section substantially controls a function of the molecular operation section, and operation caused by molecules is carried out based on the control. The molecular operation section is a portion which substantially performs computation by performing a chemical reaction of molecules.

A computation approach provided as a base in the computer of the present invention is a method for the molecular operation section to perform operation by using the parallelism of molecular computation as described above, the electronic operation section displaying the operation results based on the obtained data. The present invention discloses a computer for performing computation using nucleic acid molecules, thereby efficiently performing data parallel processing or gene analysis. In addition, data or programs are expressed by nucleic acid molecules, the operation defined by the program are replaced with molecular reaction, and the reaction are performed, thereby achieving a very large memory capacitance and high parallel processing capability as compared with a conventional electronic computer.

In developing this computer, first, the inventors paid attention to the fact that it is preferable to change the contents of a computation program when operation is performed by using a molecular computer into a data format which can be recognized and performed at the molecular operation section. Specifically, a coding molecule obtained by binding a molecule with a specific code in advance is converted prior to carrying out computation at the molecular operation section. Then, data such as variables and constants in the computation program is automatically converted into the coding molecule by using the conversion rule. Further, the inventors found out that it is preferable to perform such conversion operation at the electronic operation section in order to improve the computation speed of the entire computer.

In other words, the molecular computer of the present invention is a computer in which the molecular operation section and electronic operation section complementarily share functions with each other. Therefore, this computer is highly operable, and is capable of directly solving the NP-complete problem at a high speed or performing information analysis of physiological molecules such as nucleic acid molecule. That is, the computer of the present invention covers disadvantages of the molecular operation section such as slow character input, display or slow add, subtract, multiply, and divide operations by using the electronic operation section. This makes it possible to improve the computation speed of the entire computer. Therefore, the molecular computer of the present invention is a hybrid computer in which the electronic operation section is responsible for a function that the electronic computer can achieve at a high speed, and the molecular operation section is responsible for the other portions.

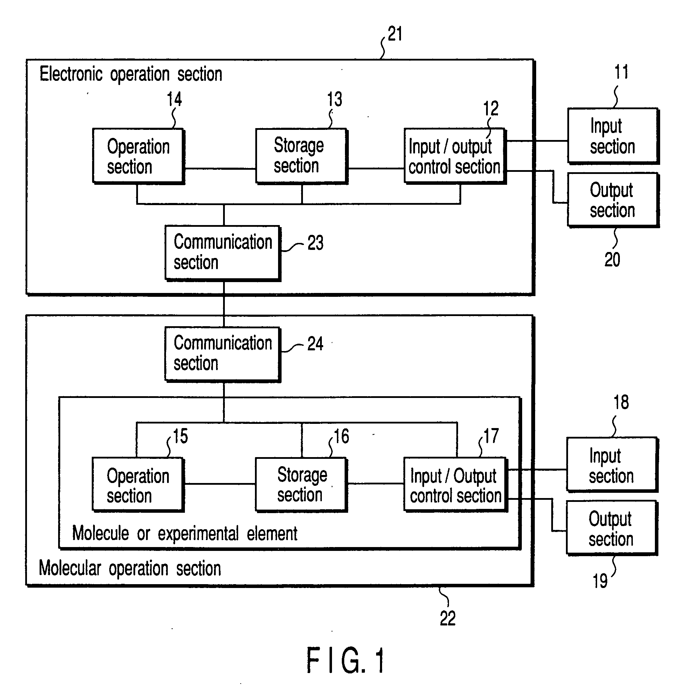

The computer provided as a base of the present invention is shown in FIG. 1. The computer of the present invention is roughly divided into an electronic operation section 21 and a molecular operation section 22. In addition, an input section 11 which inputs data and an output section 20 which outputs data are connected to the electronic operation section 21. In addition, an input section 18 which inputs data and an output section 19 are connected to the molecular operation section 22.

The electronic operation section 21 is implemented by a general electronic computer. Specifically, this section comprises an operation section 14, a storage section 13, an input/output control section 12, and a communication section 23. The storage section 13, the input/output control section 12 and the communication section 23 are connected to the operation section 14. Further, the input/output control section 12 is connected to the input section 11 and the output section 20. In addition, other constitution elements of a general electronic computer may be provided with the section. The operation section 14 is implemented by, for example, a CPU or the like. The storage section 13 is implemented by, for example, a semiconductor memory or the like.

The molecular operation section 22 comprises an operation section 15, a storage section 16, an input/output control section 17, and a communication section 24. The operation section 15, the storage section 16, the input/output control section 17, the input section 18 and the output section 19 are implemented by reaction devices such as molecules, containers, or pipette. That is, these sections are implemented by a device for performing a chemical reaction of molecules, which does not mean that they correspond to the operation section 15, the storage section 16, the input/output control section 17 or the like in device configuration on a one to one base. A configuration of the operation section 15, the storage section 16, the input/output control section 17 or the like shows an exemplary configuration when a reaction device such as molecules, container, or pipette of the molecular operation section 22 is considered as the same concept as that of the electronic operation section 21. The operation section 15, the storage section 16, and the input/output control section 17 are connected to the communication section 24. In addition, the input/output control section 17 is connected to the input section 18 and the output section 19. By these molecules and reaction devices, operation and data storage and molecular data input/output control are achieved at the same time.

In the computer of the present invention, the electronic operation section 21 controls the molecular operation section 22. When a desired program is input to the electronic operation section 21, a plan for molecular computation performed at the molecular operation section 22 is generated based on the input information. A molecular design required for target molecular computation is made, and the thus obtained information is conveyed to the molecular operation section 22. The molecular operation section 22 performs molecular computation based on the obtained information. For example, a plan for the molecular computation may be done by the operation section 14 searching a table in which the input information stored in the storage section 13 is associated with the designed molecular computation, and then, selecting the corresponding operation. In addition, molecular design may be made by the operation section 14 searching a table in which the input information stored in the storage section 13 is associated with the designed molecule, and then, selecting the corresponding molecule.

The input section 11 at the electronic operation section 21 makes it possible to use any of input means such as keyboard and mouse capable of generally inputting information manually. In addition, the output section 20 at the electronic operation section 21 makes it possible to use any of output means such as display and printer capable of generally outputting information.

In order to achieve operations of the computer, the operation section 14 functions as a translation/operation design planning section 14a, a nucleic acid sequence operation section 14b, a result analysis section 14c and the like. These means 14a to 14c are performed by a translation/operation design planning program, a nucleic acid sequence computation program and a detection result analysis program being read out from the storage section 13. In addition, a program for performing a variety of functions at the operation section 14 may be present as a program product recorded in a recording medium, may be read by a recording medium reader (not shown), may be stored in the storage section 13, and may be performed at the operation section 14. In addition, the operation section 14 functions as each of these means 14a to 14c, and functions as means performed by a general electronic computer.

Further, an output of the calculation result obtained at the molecular operation section 22 is transmitted to the electronic operation section 21 via the computation sections 24 and 23, and desired data processing may be applied by the operation section 14 or the like. For example, these calculation results are summed and operated in a format according to the processing format stored in the storage section 13 in advance. The operation result is finally output to the output section 19 or the output section 20 in a desired format. During these processes, the states of the operation section 15 and the storage section 16 of the molecular operation section 22 are indirectly grasped as information to be received at the electronic operation section 21 via the communication sections 23 and 24.

On the other hand, the molecular operation section 22 is responsible for experimentally synthesizing a nucleic acid molecule and executing desired molecular operations by use of the synthesized acidic molecules. The examples of molecular operation performed in the molecular operation section 22 will be described later.

The operation section 14 of the electronic operation section 21 is responsible for converting an initial value input from the input section 11 into expressions of coding molecules, converting the procedure and function of an computation program into an operational reaction of coding molecules, and preparing an execution procedure of the operation reaction from the computation program stored therein, in addition to processing performed by the operation section of a general electronic computer. In addition, the electronic operation section 21 performs the following assignments: the assignment of molecules to variables; assignment of containers for containing reaction solution such as regent; assignment of arrangement of reaction instruments in molecular operation (such as pipette tip) or reaction solution; assignment of transfer or operation of reaction instruments such as container or pipette tip; setting of the temperature control of a thermal cycler; the determination of implementation sequence of execution and the like.

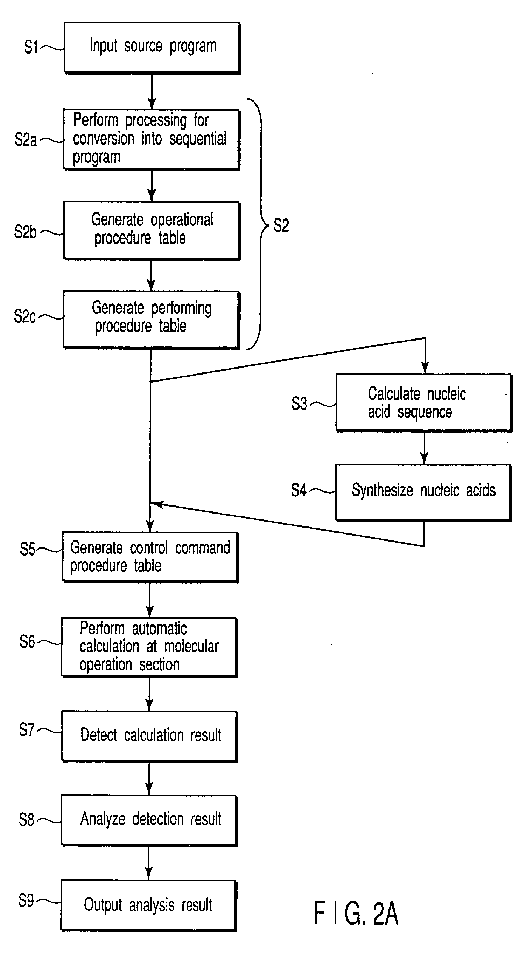

A basic operation manual of a computer will be described in accordance of a process flow shown in FIG. 2A.

Of the following (S1) to (S9), steps (S1), (S2), (S3), (S5), (S8), and (S9) are performed by the electronic operation section 21. The step (S4) is performed by a nucleic acid synthesizer 30. The steps (S6) and (S7) are performed by the molecular operation section 22.

In the step (S1), a desired computation program (source program) is input from the input section 11 of the electronic operation section 21. Information such as constants and variables of the computation program are stored in the storage section 13.

The step (S2) is a program translation processing which comprises steps (S2a) to (S2c). The source program stored in the step S1 is first converted into a sequential program (S2a). Then, data (variables and constants) contained in this sequential program are converted into expressions of coding molecules by the operation section 14 in accordance with the corresponding data stored in advance in the storage section 13. On the other hand, the procedures or functions included in the sequential program are converted into an operational reaction of the corresponding coding molecules (S2b). An operational procedure table in which operational procedures are expressed by the operational reaction is generated in accordance with the step (S2b). Next, the operational procedures are converted into execution procedures, and the execution procedure table is generated (S2c). The program translation in the step (S2) is referred to as "generation of computational reaction procedures".

The step (S3) is a process for a nucleic acid sequence computing. This computation process is a simulation for obtaining molecules newly requiring generation, of the coding molecules contained in the operational procedure table obtained in the step (S2b). This process may not be performed if a nucleic acid sequence designed in advance is used.

The step (S4) is a nucleic acid synthesizing process. The calculation result obtained in (S3) is transmitted to the nucleic acid synthesizer 30, and coding molecules which are substantially nucleic acids having the sequences designed in (S3) are synthesized. As long as the nucleic acids designed and synthesized in advance are used, this synthesizing is not required. In the case where synthesizing is not performed, the nucleic acid synthesized is input from the input section 18.

In the step (S5), the execution procedure table is converted into a control command for supplying a command to the molecular operation section 22, and a control command procedure table is generated. This control command procedure table is output to the molecular operation section 22.

In the step (S6), the molecular operation section 22 uses operational molecules prepared in the step S4, thereby performing chemical reaction of molecules which correspond to the operational reaction of programs, in accordance with the control command procedures input in the step (S5). As a result of this, automatic operation using molecules is performed.

In the step (S7), the reaction product caused by the chemical reaction performed in the step (S6) is detected and identified.

In the step (S8), the detection result obtained in the step (S7) is analyzed.

In the step (S9), the final data obtained in the step S7 is processed so as to accord with the output formula previously stored in the storage section 13. The final data is output from the output section 20. The program operation result can be verified based on the output result.

If desired, the aforementioned steps may be carried out by a loop operation. For example, the results obtained in each step are compared to the conditions or the like previously stored in the storage section 13. Depending upon the comparison results, the previously performed steps alone or in combination may be repeated by a loop operation.

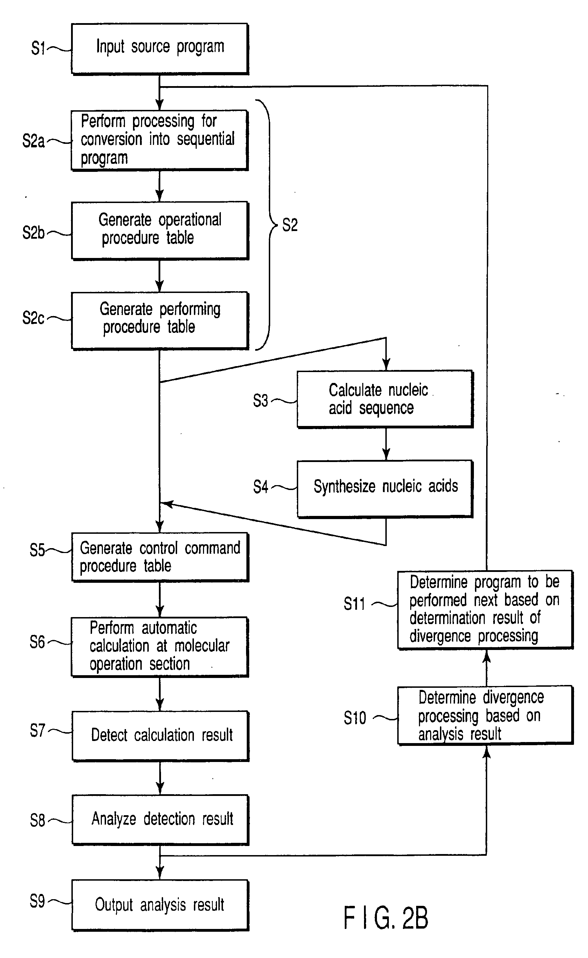

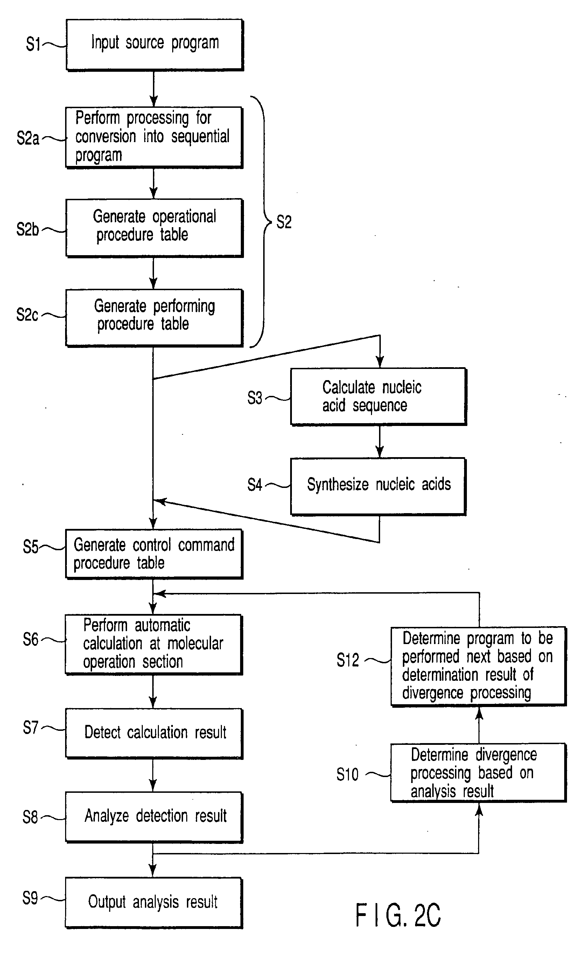

An example of a processing flow when loop processing is performed is shown in FIG. 2B. As shown in FIG. 2B, the determination of branch processing is performed based on the analysis result. A program to be processed after branch processing is determined by this determination. Then, processing reverts to the step (S2a), in which the thus determined program is converted into sequential processing or the like, and automatic execution (S6) caused by the molecular operation section is done.

In the case of FIG. 2B, it is required to generate a control command procedure table from a level of a source program every branch processing. Alternatively, the processing flow shown in FIG. 2C may be performed.

FIG. 2C shows a case where all control command procedures after branch processing, including branch processing in the source program, are previously generated. In this case, as long as the determination result of branch processing (S10) is obtained, processing goes to the step (S12), in which the following control command procedures in the control command procedure table previously generated in the step (S6) may be only determined. As a result, processing for translating programs every branch processing is eliminated.

Application of the processing flow as shown in FIG. 2B and FIG. 2C is not limited to the case of branch processing. The processing flow can be applied to all processes in which the calculation result obtained at the molecular operation section 22 is temporarily fed back to the electronic operation section 21, and procedures are changed based on the calculation result.

Further, if it is difficult to perform the steps automatically or if the automatic operation requires a large-scale device, for example, operations such as cloning culture and colony picking, are desirably performed by hands, a nucleic acid is once output into the output section 19, and then, the execution operation to be performed is displayed in the output section 20. After the execution operation is manually performed, the nucleic acid may be again input into the input section 18. In this case, the turn-on is instructed through the input section 11. Alternatively, the input may be automatically detected by the input section 11, to start the computation. In this way, the share of processing by a human being and a computer can be changed so that the human being can perform part of the processing.

In addition, in the case where an computation program is directed to obtaining a desired molecule and therefore, the operation results need not to be displayed, the computation process may be completed at the step (S6) which provides the desired molecule (reaction product). In this case, in the flow shown in FIG. 2A, the step (S7) and thereafter are eliminated. For example, this elimination is possible where computation for selecting an oligo DNA which specifically detects a specific gene is performed. In this case, a molecule obtained as a result of detection performed at the molecule operation section 22 is obtained by being output from the output section 19 intact.

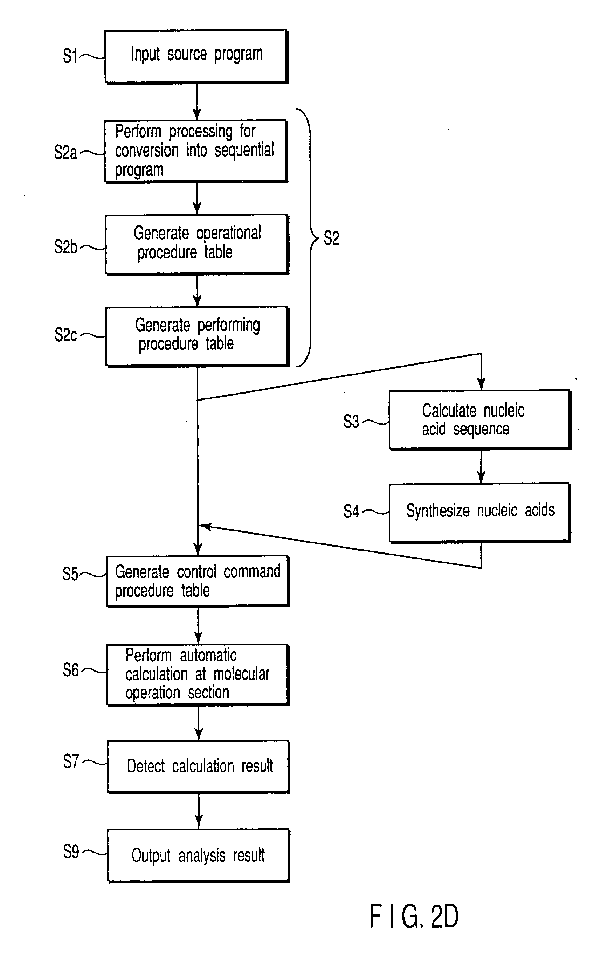

Further, after the molecular operation section 22 has detected a reaction product without converting the calculation result up to the description level of the source program, the end of computation may be output to the output section 20 in the step (S9) without performing the step (S8). In this case, the flow shown in FIG. 2D is obtained.

Conversion into coding molecules in the step (S2) can be performed by reading out a molecule conversion table previously stored in storage means, searching and picking up the corresponding data included in the molecular conversion table. A preferable molecule conversion table may include coding molecules to be used molecular operation and data to be input in the electronic operation section, both corresponding with each other.

Further, the conversion of a procedure or a function into a operation procedure can be performed by reading out the procedure-conversion table stored in the storage section and searching and picking up the corresponding data. In the procedure-conversion table, the steps of molecular operation actually carried out, the order of the steps to be carried out, and repeat number of the steps may be brought into correspondence with data to be input into the electronic operation section 21.

The information obtained in each of the steps may be stored in the storage section 13 per step, partially or in its entirety.

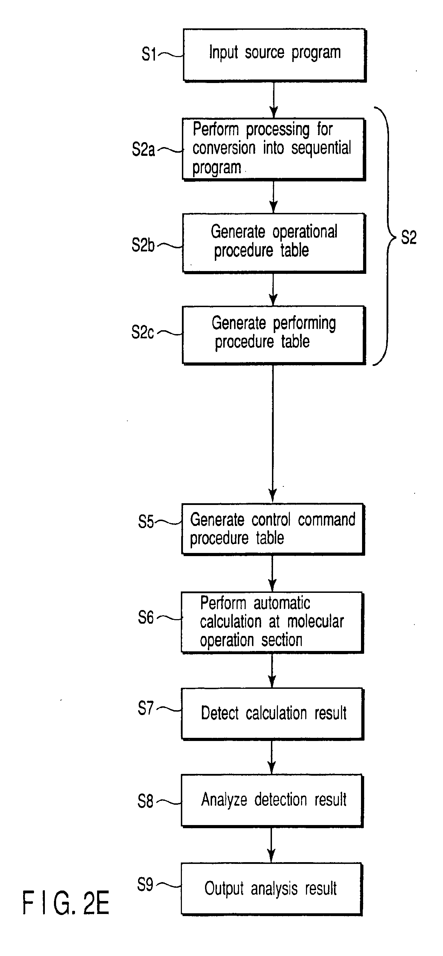

In the aforementioned procedure, a nucleic acid molecule is synthesized in the operation section 15 arranged in the molecular operation section 22. However, in addition to this operation section 15, a molecular synthesizing section is arranged at the molecular operation section 22, whereby nucleic acid molecules may be synthesized. In this case, the molecular synthesizing section is not included in the molecular operation section 22 and the electronic operation section 21. The molecular synthesizing portion is disposed to be linked with the electronic operation section 21 and the molecular operation section 22. In addition, as described previously, in the case where all the coding molecules required to perform molecular operation have already been prepared at the molecular operation section 22, nucleic acid sequence operation (S3) and nucleic acid synthesizing (S4) are not required. The flow of this case is shown in FIG. 2E.

To carry out an operation reaction using nucleic acid molecules, the operation section 15 within the molecular operation section 22 comprises the following portions.

This operation section 15 may comprise: a reaction section for performing a variety of reactions; a nucleic acid holding section for holding nucleic acids required for each of the reaction; a reagent holding portion for holding a reagent and a buffer solution required for each of the reactions; an enzyme holding portion for holding an enzyme required for each of the reactions; a heating means for heating each of the portions if desired; a cooling means for cooling each of the portions if desired; a dispensing means such as a dispensing pipette; a washing means for washing a tool such as a pipette and a reactor; and a control means configured to control a variety of operations. These portions and means may be used all or in combination of some.

In addition, the operation section 15 may comprise a detection section with a detection means configured to detect and identify a reaction product produced by a desired reaction. The detection section may not be necessarily included in the operation section 15, since the size of the detection section may be increased depending upon the detection means to be used. In this case, the detection section may not be included within the electronic operation section 21 and the molecular operation section 22, and arranged as an independent portion which are connected to the electronic operation section 21 and the molecular operation section 22.

For example, the detection in the computer of the present invention may be carried out by electrophoresis of a reaction product produced by an operational reaction. In this case, this detection is carried out by detecting the position of a peak obtained by electrophoresis, thereby determining the length of an electronic molecule. Alternatively, the reaction product is subjected to DNA sequencing. The DNA sequence of the reaction product is determined based on the data obtained by the DNA sequencing. Based on the sequence obtained, corresponding coding nucleic acids initially assigned may be determined. As another method, if a DNA micro array and a scanner are equipped, the sequence of the coding nucleic acid hybridized may be read out by the scanner.

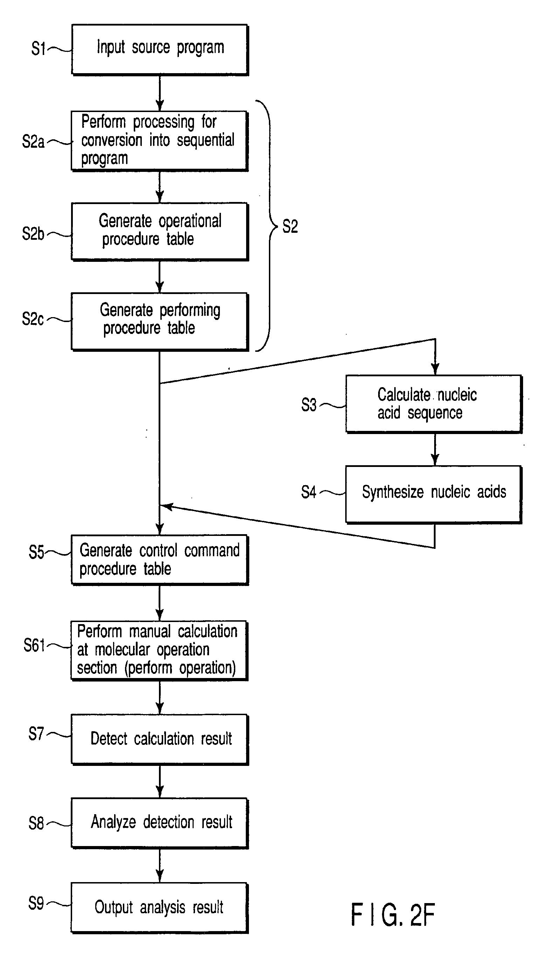

Automatic control of the molecular operation section 22 based on a control command in the step (S6) can be manually performed. The flow of this case is shown in FIG. 2F. As shown in FIG. 2F, the step (S61) is provided instead of the step (S6). In this step (S61), an operator manually operates each device of the molecular operation section 22 by referring to a control command procedure chart in which a control command procedure table is generated in the step (S5) is printed in advance by a printer or the like. Even in the case where the operator makes such manual operation, the control procedures at the molecular operation section 22 are clearly presented. Thus, remarkably efficient computation processing can be performed as compared with a case of using the conventional molecular operation section 22.

Without detecting the reaction result of the molecular operation section 22 by the detection section, it is possible to obtain an output from the reaction result itself, i.e., by nucleic acids. In this case, the step (S61) and thereafter shown in FIG. 2F are omitted.

To design a series of operational manuals, i.e., a sequence for performing operation in the electronic operation section 21, it is desirable that the execution sequence for operation is determined invariably by the input program, problem, and an initial value. For example, in the case of a 3SAT program, the loop of the program is developed, and a conditional branch is determined in advance with reference to the problem. In this manner, a computation design can be determined by the translation/operation design planning section 14a. Therefore, a whole computation plan can be determined at the time when the operation of the program is initiated. Depending upon the program to be used, a sequence detection operation step is inserted in the middle of a loop to confirm the sequence and then conditional branch must be performed in some cases. In this case, after the detection operation is performed, the operational plan of the following step may be designed depending upon the results of the detection operation.

In the computer of the present invention, for example, cDNA synthesis can be expressed by a function and stored in the storage section 13 of the electronic operation section 21 in connection with an operation at the molecular section 22. By virtue of these preparation, an automatic operation procedure planning can be performed. If the coding reaction is automatically performed, each process, for example, logical operation and/or sequencing can be automatically performed in parallel.

According to the present invention, various working robot systems for use in conventional experimentations, clinical trials, and manufacturing processes may be employed to the molecular operation section 22. In this case, the robots may be operated so as to correspond to working plans for preferentially attaining an object without being limited by the program for the electronic operation section prepared in advance.

For example, when a human gene is converted into the coding sequence, it is preferable to use a partial sequence of a xenogeneic organism such as a virus having a low homology of base sequence to the human gene. In the case where an abiotic problem such as 3SAT is solved, sequences having substantially an equal melting temperature (Tm) and causing no cross hybridization are arbitrarily designed and used as the coding sequences. If many coding sequences are required, there is used orthonormal sequences obtained through calculation performed in the electronic operation section 21 so as to satisfy desired conditions.

The electronic operation section 21 can make desired operation by a chemical reaction in which a molecule at the molecular operation section 22 is defined as a direct input. Therefore, for example, in the case of using the present invention for gene analysis, it is possible to reduce an experimentation error to the minimum. That is, computation processing is done while a nucleic acid is associated with an coding nucleic acid, and is maintained in its molecular state, and thus, the experimentation error is reduced. In addition, the computation time and running cost can be reduced by use of the molecular computer of the present invention.

Further, gene analysis is expressed by a program, whereby experimentation can be automatically computed and performed. In addition, for example, the expressed gene is subjected to coding OLA (Oligonucleotide Ligation Assay), whereby the gene is converted into the coding nucleic acid. Then, PCR amplification is performed by a common sequence at the 3' and 5' end of the coding nucleic acid, thereby the expression ratio of these may be detected precisely.

A detailed description of the coding OLA will be given later. Conversion into the coding nucleic acid can be achieved by an approach other than coding OLA.

2. Detailed Description

(1) Specific Example of the Molecular Computer

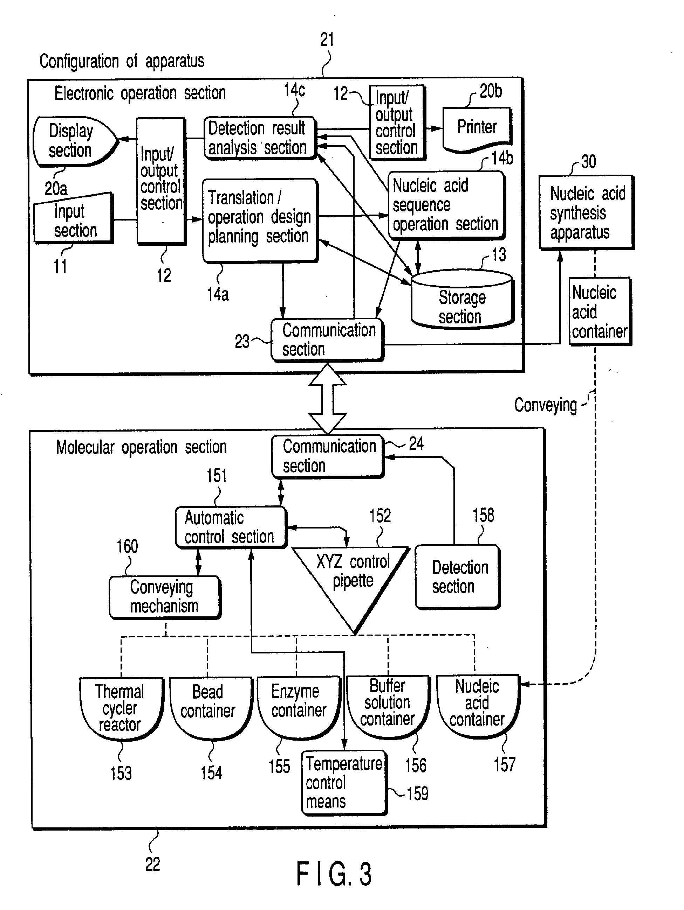

Hereinafter, the present invention will be described in more detail. A specific example of the computer according to the present invention is shown in FIG. 3. The computer shown in FIG. 3 comprises an electronic operation section 21, a molecular operation section 22, and a nucleic acid synthesizer 30. The electronic operation section 21 includes a communication section 23, and the molecular operation section 22 includes a communication section 24. Data transmission/reception is performed between these communication sections 23 and 24, thereby enabling information communication between the electronic operation section 21 and the molecular operation section 22. An example of FIG. 1 shows a case in which the nucleic synthesizer is incorporated in the molecular operation section 22. However, this synthesizer is provided independently of the molecular operation section 22 in FIG. 3.

The communication section 23 of the electronic operation section 21 is electrically connected to the nucleic acid synthesizer 30. This communication section 23 is configured so that the nuclear acid synthesizer 30 can perform nucleic acid synthesizing based on a nucleic acid synthesizing command transmitted from the communication section 23. The nuclear acid synthesizer 30 includes a nucleic acid container and a control section which controls nucleic acid molecules based on a command from the communication section 23, for example. The nucleic acid synthesized under the control of the control section is contained in the nucleic acid container, and is conveyed to the molecular operation section 22 together with the container. The nucleic synthesizer 30 can be provided at the molecular operation section 22. In this case, there is no need to provide a conveying system which conveys the nucleic acid containers from the nucleic acid synthesizer to the molecular operation section 22 independent of the molecular operation section 22. The nucleic acid containers may be conveyed by a conveying mechanism or may be manually conveyed.

The nucleic acid synthesizer 30 may not be connected to the electronic operation section 21. In this case, data required for synthesizing nucleic acids is outputted by the electronic operation section 21, so that nucleic acid synthesizing may be performed based on the output result.

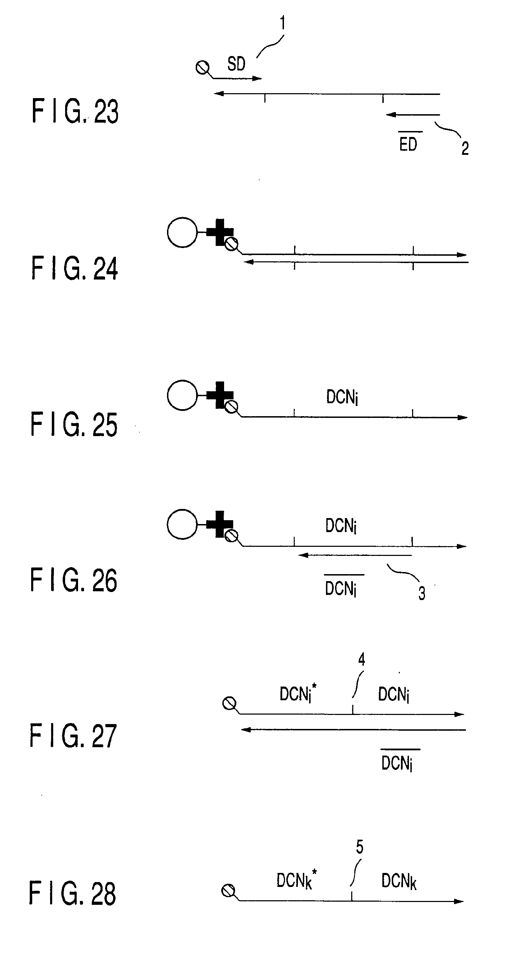

The electronic operation section 21 comprises a translation/operation design planning section 14a, a nucleic acid sequence operation section 14b, and a detection result analysis section 14c. These sections 14a to 14c corresponds to the operation section 14 of FIG. 1. A predetermined program is read out from the storage section 13, whereby the operation section 14 functions as each of these sections 14a to 14c. In addition, a display section 20a and a printer 20b as an output section 20 of FIG. 25 and a input section 11 are connected to each of these sections 14a to 14c and the like via the input/output control section 12.

The molecular operation section 22 has: an automatic control section 151; an XYZ control pipette 152; a thermal cycler reactor 153; a bead container 154; an enzyme container 155; a buffer solution container 156; a nucleic acid container 157; a detection section 158; temperature control means 159; and a conveying mechanism 160. These elements serve as the operation section 15, the storage section 16, the input/output control section 17, the input section 18, and the output section 19 of FIG. 1.

The molecular operation section 22 includes the automatic control section 151 connected to the communication section 24. This automatic control section 151 outputs a drive signal to each of these elements (152 to 157, 159, and 160) in order to automatically control: the XYZ control pipette 152; the thermal cycler reactor 153 which performs a reaction of nucleic acid; the bead container 154 which holds beads; the enzyme container 155 which holds enzymes; the buffer solution container 156 which holds buffer solutions; the nucleic acid container 157 which holds nucleic acids; the temperature control means 159; and the conveying mechanism 160. Each of these elements (152 to 157, 159, and 160) is driven upon the receipt of this drive signal, thereby controlling a reaction of molecule and reaction conditions. Therefore, these elements (152 to 157, 159, and 160) function as a reaction control section as a whole, and each of these elements functions as a reaction control element.

Control under the automatic control section 151 is performed based on a control command transmitted from the electronic operation section 21 via the communication section 24. The reactors 153 to 157 may be a beaker, a test tube, micro-tube and the like as long as it contains a solution including nucleic acids or the like.

As the thermal cycler reactor 153, any reactor may be used as long as it is capable of adjusting the temperature of the container. For example, this container may be constructed by fitting a reactor to a generally used thermal cycler. In this example, beads are used as a carrier. However, another carrier may be used. Carriers are disclosed in U.S. Patent No. 6,150,516, and PCT publication No. WO99/22030, the contents of which are incorporated by reference herein. If another carrier is used, an appropriate structural element may be used in place of or in addition to the bead container 154. The enzyme container 155 may be set together with the temperature control means 159 such as a cooler to protect enzymes from being inactivated. If necessary, the temperature control means 159 such as a cooler or heater may be arranged at other holding means.

The reaction is performed in the thermal cycler reactor 153 in accordance with a control command. For example, a desired amount of the content is taken from various containers 154 to 157 by the XYZ control pipette 152, and then the reaction is performed under conditions including a desired temperature. The movement at each section is controlled by the automatic control section 151 within the molecular operation section. The XYZ control pipette 152 used herein is a pipette which can be moved, if necessary, in the XYZ direction and/or upward and downward, under the control of the automatic control section 151.

The conveying mechanism 160 conveys each of the containers 153 to 157, for example, to another container storage means (not shown) or to the detection section 158, based on the control command from the automatic control section 151.

After completion of the reaction, a reaction product is detected and identified at the detection section 158. As the detection section 158, any detection means or analysis means such as an electrophoretic device, sequencer, chemical luminescent measurer, or a fluorescent measurer may be used as long as it is used for detecting or analyzing a nucleic acid molecule.

The control command generated at the electronic operation section 21 is output to the communication section 23. The communication section 23 transmits these control commands to the molecular operation section 22 via the communication section 24. The molecular operation section 22 performs molecular operation by controlling each of the elements based on the received control command. The operation result is transmitted to the electronic operation section 21 via the communication section 23 by means of the communication section 24.

The communication sections 23 and 24 may be attained by wired communication means such as cables or wireless communication means using such as electric waves.

A nucleic acid synthesizing command generated at the electronic operation section 21 is output to the nucleic acid synthesizer 30. The nucleic synthesizer 30 performs nuclear acid synthesizing by controlling each of the elements based on the received nucleic acid synthesizing command. A nucleic acid container containing nucleic acid molecules which are produced as the result of synthesizing is conveyed to the molecular operation section 22. Of course, only the nucleic acid molecules contained in the nucleic acid container may be carried into the nucleic acid container of the molecular operation section 22.

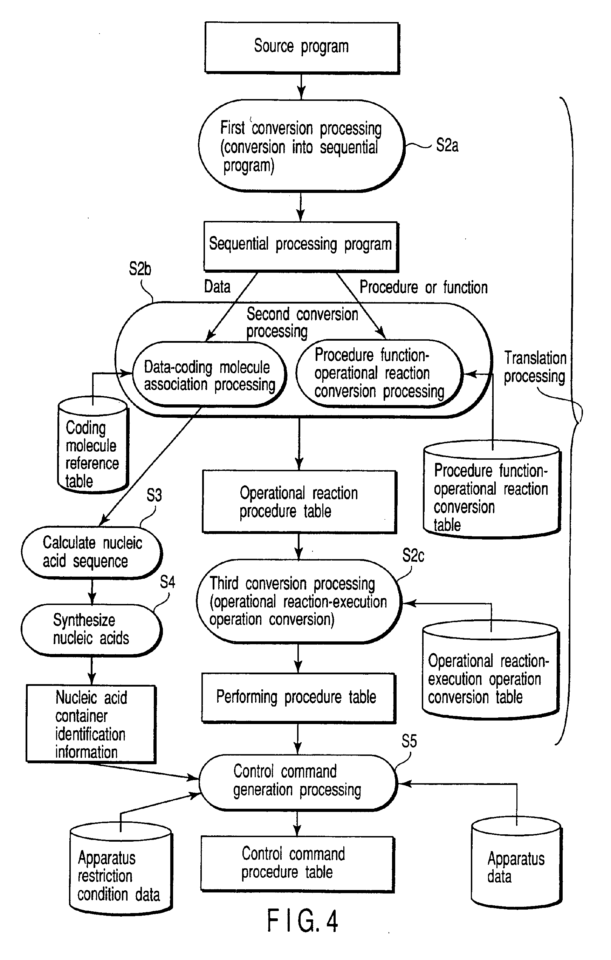

An example of functions of the operation section 21 at the electronic operation section 14 will be described below in accordance with the flow chart shown in FIG. 4.

(Translation/operation design planning section 14a)

The translation/operation design planning section 14a performs three processings.

First processing is a translation processing ((S2a) to (S2c)) which translates a source program including an initial value input from the inputted section 11, and generates an execution procedure table

Second processing is a control command generation processing (S5) which converts the execution procedure table into an computation planning level (control command), and generates a control command procedure table (S5)

Third processing is an operation design planning processing which causes the molecular operation section 22 to perform an computation plan based on the generated computation plan.

The translation processing comprises first to third conversion processings.

The first conversion processing (S2a) is a processing which converts a source program including algorithms for branch processing, loop processing and the like, for example, into a sequential processing program which is mainly a sequential processing algorithm convertible to a control command.

The second conversion processing (S2b) is a processing which converts commands of the sequential processing program into a coding molecule and expression of a chemical reaction level using operational reaction of the coding molecule, thereby generating an operational reaction procedure table.

The third conversion processing (S2c) is a processing which converts an operational reaction procedure table into driving operation expression of an operation level expression of the configurations of the molecular operation section 22, thereby generating the execution procedure table.

After the second and third conversion processing have been first performed without performing the first conversion processing, the first conversion processing may be performed.

The second conversion processing associates data such as constants and variables defined by the source program with the coding molecule, and associates procedures or functions defined by the source program with the operational reaction. A coding molecule reference table stored in advance in the storage section 13 is used for association between the data and the coding molecule. A procedure or function-operational reaction association data table is used for association between the procedure or function and the operational reaction.

In the coding molecule reference table, a correlation between one coding molecule and another code molecule is defined. For example, in the case where the second conversion processing determines that one coding molecule is associated with one variable in a program, association between another variable and coding molecule is performed by referring to the coding molecule reference table, and determining a proper coding molecule based on the correlation with the first defined coding molecule. The correlation used here include a complementation between one coding molecule and another coding molecule, for example. In addition, each coding molecule is specified up to a nucleotide level.

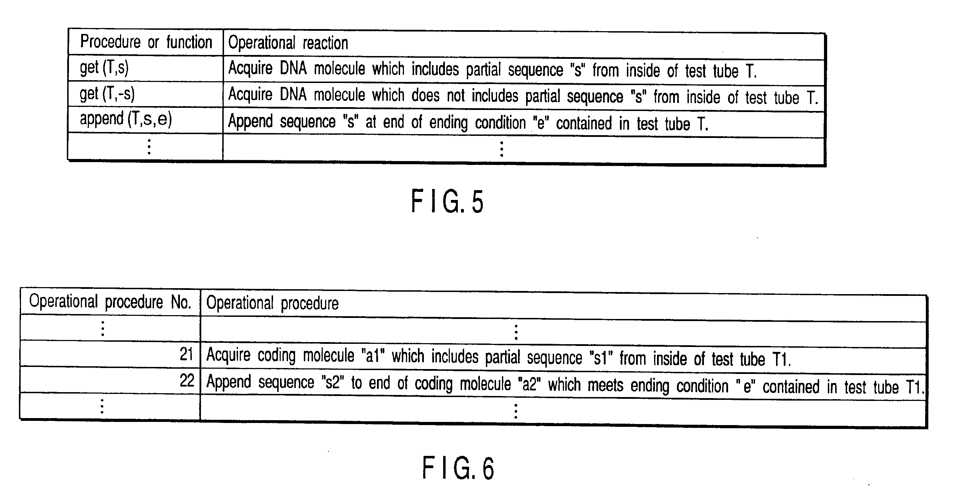

The procedure or function-operational reaction association data table is a table in which a plurality of control commands are associated with one procedure. FIG. 5 is a view showing an example of the procedure and function-operational reaction conversion data table. In FIG. 5, operational reaction is represented by writing. However, a data format actually stored as a data table on the electronic operation section 21 is divided by elements such as operation, devices, sequences, coding molecules and the like, and respective ones are expressed so as to be identifiable by the electronic operation section 21.

The sequential process program is defined by a combination between data and procedure or function. Therefore, a coding molecule is assigned to a coding molecule which is one of elements in a procedure of the sequential process program for replacing a procedure or function with operational reaction, whereby an operational reaction procedure table is generated. In addition, assignment of a device or sequence may be performed in the same manner as that of assignment of a coding molecule.

An example of the operational reaction procedure table is shown in FIG. 6. As shown in FIG. 6, each operational procedure is defined by operational reaction and variables and constants for specifying such operational reaction. In addition, in this operational procedure, association with devices of the molecular operation section 22 (for example, a test tube T is the second container of the five nucleic acid containers 157) is not done. In addition, although operation for performing operational reaction (such as "acquire", for example) is specified, each operational procedure is not still at a level such that the automatic control section 151 of the molecule operation section 22 can recognize as a command for control configurations in its operation expression format.

In this second conversion processing, assignment of data (variables, constants) and coding molecule is performed by using the coding molecule reference table. However, a coding molecule other than that already prepared as a reagent in the molecule operation section 22 in actuality is not registered in the coding molecule reference table. Therefore, for a coding molecule which is not registered, it is required to perform nucleic acid synthesizing for obtaining the required coding molecule. Therefore, the translation/operation design planning section 14a orders the nucleic acid sequence operation section 14b to carry out a nucleic acid sequence acquisition of the coding molecule which is not registered. A detailed description of functions of the nucleic acid sequence operation section 14b will be given later.

In the third conversion processing, an operational reaction procedure table is converted into an operation which is defined by operation level expression of configurations of the molecule operation section 22, and an execution procedure table is generated by using an operational reaction-execution operation conversion table. In the operational reaction-execution operation conversion table, in general, one operation reaction is associated with a plurality of execution operations. This is because a plurality of operations for control each configuration of the molecule operation section 22 are required to perform operational reaction. Of course, one execution operation may be associated with one operational reaction.

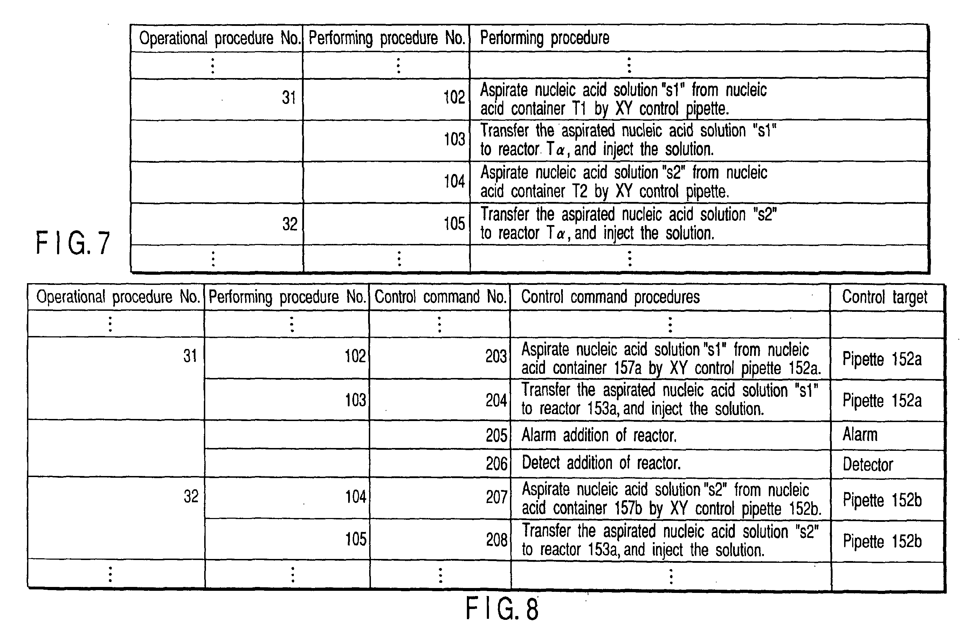

An example of the execution procedure table converted by using this operational reaction-execution operation conversion table is shown in FIG. 7. As shown in FIG. 7, one operational procedure is associated with a plurality of execution operations. In addition, the contents of procedures is at a level such that the automatic control section 151 of the molecule operation section 22 can recognize as a command for controlling configurations. However, association of the molecule operation section 22 with an actual configuration (for example, test tube T is the second container of the five nuclear acid containers 157) is not done.

In the operational design generation processing, a control command procedure table is generated based on the execution procedure table obtained by translation processing. Device data and device restriction condition data are used for generating the control command procedure table.

In the operational design generation processing, device data is referred, and execution procedures of the execution procedure table is converted into a control command. The control command used here is a command which is input to the automatic control section 151. Upon the receipt of this control command, the automatic control section 151 controls devices of the molecular operation section 22 (such as the pipette 152, containers 153 to 157, conveying mechanism 150 and the like shown in FIG. 3).

In more detail, the device of the execution procedures each is assigned to an actual device configuration based on device data in order to ensure conversion into a control command. By this assignment, each execution operation is converted to expression which is at a level such that such each execution operation specifies an actual device of the molecular operation section 22, and makes control for such device. The automatic control section 151 cannot recognize physical configuration which is to be controlled based on the execution operation of the execution operation table. Therefore, for example, in the case where two pipettes 152 are provided in the molecular operation section 22, the automatic control section cannot identify which of the pipettes 152 is to be operated. In contrast, a control command is specified at a level such that the pipette 152a of these two pipettes 152a and 152b is to be operated.

Further, every time an execution operation is converted into a control command, an additional control command is added based on the device restriction conditions by referring to device restriction condition data. The device restriction condition data is defined; for example, the number and capacity of containers 153 to 157 such as reactors; the number and extraction quantity of XYZ control pipettes 152; the number and disposition of reagents, a temperature control speed caused by the temperature control means 159; conveying speed of the conveying mechanism 160; and distance between configurations or the like. For a start, an execution operation is converted into a control command on a one to one base, assuming that device resources are unlimited. However, when an execution operation is converted into a control command on a one to one base, processing which cannot be continued may occur due to a device restriction of the molecular operation section 22. For example, since the number of reactors is two, a processing which requires three reactors at the same time cannot be continued. In this case, such device restriction conditions are registered in advance in the storage section 13, and procedures when the processing cannot be continued can be set by referring to the conditions. An example of procedures includes: addition of a control command which issues a warning requesting addition of a reactor to an operator by broadcast means such as alarm (not shown) or a control command that broadcast whether or not the reactor is added by a sensor (not shown). A control command number is assigned for each an additional control command based on the device restriction conditions. It is preferable that operational procedure numbers or implementation manual numbers and the like be associated with control command numbers. In addition, the obtained control command is associated with a control target because a control target at the molecular operation section 22 is identified.

An example of the thus obtained control command procedure table is shown in FIG. 8. As shown in FIG. 8, a control target is identified, and a sequence in which device restriction conditions are considered is obtained.

Like a control command for aspirating a nucleic acid solution by the XYZ control pipette and a control command for conveying the solution to a reactor, a series of control commands may be formulated. In this case, each procedure is converted into a set of control commands, and such set of control sets may be transmitted to the molecule operation section 22. In particular, a plurality of control commands generated from one operational reaction is easily formulated as a set of control commands. In this case, it is preferable that the automatic control section 151 have a data table in which a set of control commands is associated with a control command, the set of control commands being converted into the control command based on this data table, thereby controlling configurations. In addition, the automatic control section 151 may not have such a data table, and devices (such as XYZ control pipette 152 or conveying mechanism 160, for example) may perform a set of control commands automatically.

In the computational design planning processing, a control command is output to the automatic control section 151 in order of control command numbers based on the control command procedure table obtained by the computational design planning processing. In this manner, the automatic control section 151 can automatically perform control of each device required for molecular operation. Of course, in the case where manual operation must be intervened based on device restriction, such control is made for a device as well. For example, a warning for replenishing a reactor at its specified position is alarmed, an operator replenishes the specified reactor at its specified position. In this manner, an operator does not need to always monitor a progress in operation of the molecular operation section 22.

In the above example, although there is shown a case in which a control command in which device restriction is considered is generated based on device restriction condition data through a control command generation processing, this processing may be eliminated in the case a sufficient number of device resources exist.

In addition, although there is shown a case in which a control command procedure table is generated in advance, a control target is specified, and then, molecular operation is performed, the present invention is not limited to this case. For example, there may be a system in which a use presence/absence check sensor is provided at each device (such as XYZ control pipette 152 or containers 153 to 157). The use presence/absence check sensors check the presence or absence of using a device resource every time each control command is performed. The automatic control section 151 automatically assigns a control target based on the sensor detection data.

In addition, device data can be variously modified according to a device configuration of an available molecular computer without being limited to the configuration as shown in FIG. 3. As long as the device configuration of the available molecular computer and association between an execution operation and an operational reaction (operational reaction-execution operation conversion table) are registered as device data, even whatever a molecular computer with any device configuration may be, such computer can be obtained as a target of molecular operation of the present invention. That is, device data, device restriction condition data, and an operational reaction-execution operation conversion table are registered for each of the different molecular operation sections, molecular operation can be easily performed by the molecular operation section having a device configuration without changing elements of the electronic operation section.

In addition, all the first to third conversion processings may not be necessarily performed by the electronic operation sections 21. The automatic control section 151 of the molecular operation section 22 is functioned in the same manner as that of the operation section 14 of the electronic operation section 21, whereby these processes may be performed at the automatic control section 151.

Although there has been shown that the translation/operation design planning section 14a converts a program into a sequential processing format, and generates control command procedures, the present invention is not limited to this case. For example, in the case where a conditional branch processing based on a operation result or the like is presented, the translation/operation design planning section 14a may temporarily receives the operation result (detection result) from the detection section 158. Then, the translation/operation design planning section 14a may performs the conditional branch processing based on the operation result and newly assigns to the molecular operation section 22 the control command procedures after branched. In this manner, even in the case where conditional branch is done, molecular operation can be automatically continued. Otherwise, the electronic operation section 21 temporarily receives the detection result from the detection section 158 before all the control command procedures terminate, and molecular operation reflecting the detection result is continued, whereby automatic operation can be performed.

Further, although there has shown a case in which the translation/operation design planning section 14a automatically performs a data-coding molecular association process in second conversion processing by referring to a coding molecule reference table, the present invention is limited to this case. Variables or constants and coding molecules may be manually associated.

(Nucleic acid sequence operation section 14b)

The nucleic acid sequence operation section 14b computes a nucleic acid sequence which corresponds to a coding molecule given by data-coding molecule association processing of the translation processing at the translation/operation design planning section 14a. A number of coding molecules given by data-coding molecule association processing are given. In addition, a limited number of coding molecules is registered in the coding molecule reference table. Therefore, the base sequences of insufficient coding molecules are designed by computation at the nucleic acid sequence operation section. Specifically, there are designed a base sequence having a optimum duplex melting temperature (Tm) and a free energy value with a large secondary structure, such that cross hybridization does not occur with a coding molecule already registered in the coding molecule table. To avoid the occurrence of the cross hybridization, simulation of hybridization with the sequences which exist in the coding molecule reference table is performed and checked. The melting temperature and free energy value can be easily computed from the sequence. Therefore, the sequence of proper melting temperatures or free energy values can be selected. The sequence of nucleic acids to be synthesized is determined by these computations.

The nucleic acid sequence operation section 14b transmits the obtained nucleic acid sequence operation result to the nucleic acid sequence synthesizer 30 via the communication section 23. The nucleic acid sequence synthesizer 30 synthesizes nucleic acids automatically or manually based on the given nucleic acid sequence operation result, contains the obtained nucleic acid solution in the nucleic acid container, and conveys the container automatically or manually. The nucleic acid sequence synthesizer 30 transmits nucleic acid container identification information for identifying a nucleic acid container having the synthesized nucleic acid solution contained therein to the translation/operation design planning section 14a. The Translation/operation design planning section 14a generates a control command procedure table in control command generation processing, based on the received nucleic acid container identification information. In this manner, even in the case where a computation device which is not registered as device data in advance is introduced in the molecular operation section 22, such device can be incorporated into automatic molecular operation.

This nucleic acid sequence operation section 14b may not be performed by the electronic operation section 21 as long as a nucleic acid solution is prepared by another device. In addition, in the case where all the nucleic acid solutions having required nucleotides are registered, this acid nucleic acid sequence operation and nucleic acid synthesizing can be omitted.

(Detection result analysis section 14c)

A detection result analysis section 14c receives the detection result obtained by the detection section 158 of the molecular operation section 22 via the communication sections 24 and 23, and outputs the received detection result at the display section 20a or printer 20a. In addition, it is preferable that the detection result is analyzed, and the analysis result is outputted as well as output of the detection result. In addition, the result computed by the translation/operation design planning section 14a, the nucleic acid sequence operation section 14b and the like may be properly outputted.

The detection result from the detection section 158 is the DNA reaction result itself. It is often that the detection result is not information that the user desires. Therefore, a work of converting the reaction result into information which can be identified by the user is required. This conversion work can be automatically performed by the detection result analysis section 14c. This is because this conversion work may perform reverse conversion of the conversion work from a source program which is information that can be identified by the user into the control command procedure table which can be recognized by the molecular operation section 22.

Specifically, the analysis of the detection result can be performed by referring to the control command procedure table, device data, execution procedure table, operational reaction procedure table, coding molecule reference table, and procedure or function-operational reaction conversion table or the like.

Assume that analysis processing for performing conversion from a reaction result into a level of a solution of the source program is performed. The reaction result is a result of chemical reactions, and the detection result is obtained by the detection section 158. A correspondence between the respective data on the detection result of this detection section 158 and the control command, execution procedure, operational reaction, or coding molecule can be obtained by referring to the control command procedure table, execution procedure table, operational reaction procedure table, coding molecule reference table, procedure or function-operational reaction conversion table and the like. By this analysis processing, the reaction result is converted into information available for the users. Therefore, the user can recognize the operation result without worrying about the contents of operation or the like at the electronic operation section 22.

This analysis processing is not mandatory, for example, when the reaction result is information required by the user. In this case, the detection result from the detection section 158 is not converted at all. Alternatively, the detection result is analyzed into a variety of data expression formats such as control command level, operational reaction level, or coding molecule level, whereby the information required by the user is obtained. In addition, in the case of gene information analysis, analysis processing up to gene information level may be performed.

An example of operational procedures at the electronic operation section will be described here.

First, the source program including the initial value input from the input section 11 is converted into an internal code by the input/output control section 12, and then, the converted program is stored in the storage section 13. The internal code denotes a code that the operation section 14 of the electronic operation section 21 can be recognize electrically and in which data processing is enable. Next, the source program converted into this internal code is converted into the coding molecules and the operational reaction procedure table of the coding molecule at the translation/operation design planning section 14a, and the execution procedure table for operational reaction is generated. Then, the table is stored in the storage section 13. In addition, the nucleic acid sequence operation section 14b computes coding molecules based on the operational reaction procedure table as required. The operation result is sent to the nucleic acid synthesizer 30. The nucleic acid synthesizer 30 synthesizes nucleic acids based on the obtained operation result, and conveys the obtained product to the molecular operation section 22. In addition, the nucleic synthesizer 30 transmits information in which the nucleic acid solution is identified as a device to the electronic operation section 21 because the obtained product is incorporated into automatic operation.

The information handled in these steps may always be displayed at the display section through the result analysis section 14c. Alternatively, only the desired information may be set so as to be displayed any time. The information may be printed out as required.

In the present invention, the molecular operation section 22 includes at least the steps or means concerning the start to end of biological specific reaction such as hybridization reaction, enzyme reaction, and antigen/antibody reaction. Here, the time of starting reaction includes at least the stage recognized as indicating that a reaction pair is uniquely selective at the earliest, and includes a time immediately before object such as detection or separation can be achieved at the latest. In addition, the time of ending reaction includes at least the earliest time at which an object of detection, separation and the like can be achieved at the earliest, and includes a time longer than an elapsed time at which an object of detection, separation and the like can be sufficiently achieved at the latest.

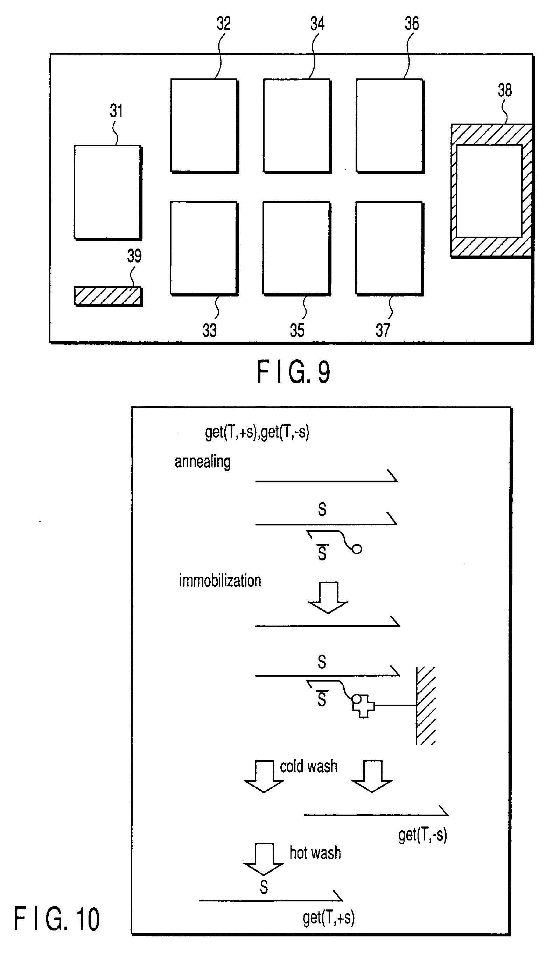

FIG. 9 shows a more detailed disposition example of the molecular operation section 22 according to the present invention. For example, in the molecular operation section, it is possible to arrange 8-chip pick-up rack 31, a single-chip pick up rack No. 0, 32, a single-chip pick up rack No. 1, 33, a 96-hole multi titer plate (hereinafter, referred to as MTP) No. 2, 34, a 96-hole MTP No. 0, 35, a 1.5 mL tube rack 36, a 96-hole MTP No. 1, 37, a thermal cycler 96-hole MTP 38, and a chip discharge hole 39. However, the arrangement of the molecular operation section is not particularly limited thereto and can be modified in various ways, if necessary.

(2) Molecular operation in molecular operation section

(a) Application to 3SAT

The molecular operation in the molecular computer according to one aspect of the present invention, described below, may be each aspect of the present invention described in the above described paragraph I.

Hereinafter, a description will be given with respect to an example where computation for solving a fulfillment possibility determination problem (3SAT) of three summation/multiplication proposition logical equation which is a typical NP complete problem is performed by applying the molecular computer of the present invention.

First, we will describe a problem residing in a DNA computation based on a conventional Adleman-Lipton paradigm. A first problem resides in that it is necessary to form a pool for storing DNA molecules expressing all potential solutions. This is because the number of potential solutions of the NP complete problem exponentially increases compared to the number of variables. Therefore, if the size of the problem increases, it is impossible to form a pool for storing all possible solutions even if a DNA computer having a super memory capacity is used. This is a significant problem associated with the Adleman-Lipton paradigm.

A case where the Adleman-Lipton paradigm is applied to the 3SAT will now consider.

Assuming that the number of logical variables is 100, the number of possible solutions will be $2^{100} = 1.3 \times 10^{30}$. If a single variable is expressed by a DNA molecule having 15 base pairs, at least 2 million tons of DNA molecules are required in order to prepare a complete probe. The amount of 2 million tons is a unrealistic value. In this case, if a single solution is expressed by a single molecule, the risk of losing the single molecule in the middle of an operation reaction is high. Therefore, in practice, a larger amount of DNA molecules is actually required. Assuming that the number of variables is 200, The volume of the DNA molecules required is about 40 trillion-times of the mass of the Earth. It is virtually impossible to solve the problem.

Under the circumstances, the inventors assumed that the NP complete problem may be solved by executing an algorithm based on a dynamic programming by a molecular computer (also called as DNA computer). In place of preparing all possible solutions in the beginning as the Adleman-Lipton paradigm, possible solutions for a part of the problem are prepared. From the possible solutions, a right solution is selected and extracted. This procedure is repeated while the size of the part of the problem gradually increases, and finally, the solution of the original problem can be obtained. If this technique is used, the number of possible solutions to be prepared can be greatly reduced.

Here, molecular design described in an paragraph (1, 1) preparation described later is first converted from the source program into required information at the translation/operation design planning section of the electronic operation section. Then, a nucleic acid sequence suitable to a desired condition is designed at the nucleic acid sequence operation section. In addition, the steps can be performed at the operation section of the electronic operation section. A nucleic acid is synthesized based on information obtained at the electronic operation section, and molecular operation is performed in the molecular operation section.

(b) 3SAT Program

3SAT, a typical example of the NP complete problem, can be solved by performing a DNA computation in accordance with the following program based on an algorithm of dynamic programming.

Equation 2

Problem :      4 variables, 10 clauses

$$(x_1 \vee x_2 \vee \neg x_3) \wedge (x_1 \vee \neg x_2 \vee \neg x_3) \wedge (\neg x_1 \vee x_2 \vee x_3) \wedge (\neg x_1 \vee \neg x_2 \vee x_3) \wedge$$

$$(x_1 \vee x_3 \vee x_4) \wedge (\neg x_1 \vee x_2 \vee x_4) \wedge (\neg x_1 \vee \neg x_3 \vee x_4) \wedge (x_2 \vee \neg x_3 \vee \neg x_4) \wedge$$

$$(x_2 \vee x_3 \vee \neg x_4) \wedge (\neg x_2 \vee x_3 \vee \neg x_4)$$

where a symbol "$\wedge$" is a logical AND, a symbol "$\vee$" is a logic OR, a symbol "$\neg$" denotes negation.

Equation 3

Solution :

YES

$$\{X_1, X_2, X_3, X_4\} = \{1.1.1.1\}$$

Using the computer of the present invention, 3SAT of 4 variables, 10 clauses, was solved. The problem which has been solved is shown in Equation 2. The solution of the problem is shown in Equation 3. The problem of Equation 2 comprised of $x_1$, $x_2$, $x_3$ and $x_4$ variables. 10 of clauses comprising of 3 literals are coupled by a logical OR. Solving the equation is to obtain a set of values satisfying the equation, more specifically, to know whether a solution is present or not. If present, a set of values is obtained.

Equation 4

```
function dna 3 sat (u₁, v₁, w₁, u₂, v₂, w₂ , u₃, v₃, w₃, ..., u₁₀, v₁₀, w₁₀)
begin
```

$T_2 = \{X_1^T X_2^T, X_1^F X_2^T, X_1^T X_2^F, X_1^F X_2^F\};$

```
        for k = 3 to 4 do
```

$\quad$ amplify $(T_{k-1}, T_w^T, T_w^F);$

```
            for j = 1 to 10 do
                if wⱼ = xₖ then
```

$\quad T_w^F = \text{getuvsat}(T_w^F, u_j, v_j);$

```
                end
                if wⱼ = ¬xₖ then
```

$\quad T_w^T = \text{getuvsat}(T_w^T, u_j, v_j);$

```
                end
            end
```

$T^T = \text{append}(T_w^T, X_k^T, X_{k-1}^{T/F}); \qquad T^F = \text{append}(T_w^F, X_k^F, X_{k-1}^{T/F});$

$T_k = \text{merge}(T^T, T^F);$

```
        end
        return detect (T₄);

    function getuvsat (T, u, v)
    begin
```

$T_u^T = \text{get}(T, + X_u^T); \qquad T'^F_u = \text{get}(T, - X_u^T);$

$T_u^F = \text{get}(T'^F_u, + X_u^F); \qquad$ /* can be omitted */

$T_v^T = \text{get}(T_u^F, + X_v^T);$

$T^T = \text{merge}(T_u^T, T_v^T);$

```
        return Tᵀ;
    end
```

To solve the given problem, a program represented by Equation 4 is executed by the computer of the present invention. A description approach conform to Pascal. Specifically, a program (dna3sat) represented by Equation 4 is defined as a source program, and is input at the input section 11 of FIG. 1. In the input source program, a control command procedure table is generated through translation, and molecular operation is performed at the molecular operation section 22. Then, the operation result represented by Equation 3 is obtained through steps (s2) to (s8).

The Function "dna3sat" is a main function for outputting a solution if the solution exists when a problem is given. Function "getuvsat" is incorporated into this Function "dna3sat". These functions "dna3sat" and "getuvsat" are comprised of five basic functions "get", "amplify", "append", "merge", and "detect". Of the basic functions, Functions "get", "amplify", and "append" are performed as procedures for, or functions of, the source program by a chemical reaction shown in FIG. 10 to FIG. 13.

Next, a chemical reaction associated with each basic function and an operation by which the chemical reaction is accompanied will be described here. First, the functions "get (T, +s) and "get (T, -s) will be described in accordance with FIG. 10.

The Function "get" is a function in which reaction operation for obtaining a single-stranded oligonucleotide containing sequence s or a single-stranded oligonucleotide containing no sequence s from a solution mixture T (tube) of oligonucleotide is defined as operational reaction of coding molecules. The symbol s used herein represents a specific sequence comprising several nucleotides or several tens nucleotides. The "get (T, +s)" represents getting an oligonucleotide including the sequence s, and the "get (T, -s) represents getting an oligonucleotide including no sequence s. T, +s, and -s are variables defined to be associated with coding molecules obtained by coding molecules based on a nucleic acid sequence.

In a first step, an oligonucleotide having a complementary sequence to the sequence s and labeled with biotin at the 5' end is placed in a tube T, in which annealed with an oligonucleotide having the sequence s.

The resultant hybrid is captured by magnetic beads having streptoavidin attached on the surface. Thereafter, the magnetic beads are washed with a buffer solution at a temperature at which the hybrid having a complimentary sequence s is not dissociated (that is, cold wash). As a result, the oligonucleotide having no sequence s can be acquired from the buffer solution. In this manner, Function "get (T, -s)" can be executed.

Further, after completion of the cold wash, the beads are washed with a buffer solution of a relatively high temperature at which the hybrid can be dissociated. As a result, the oligonucleotide having the sequence s can be obtained. In this manner, the "get (T, +s)" can be executed. As described above, two functions can be performed by a single operation.

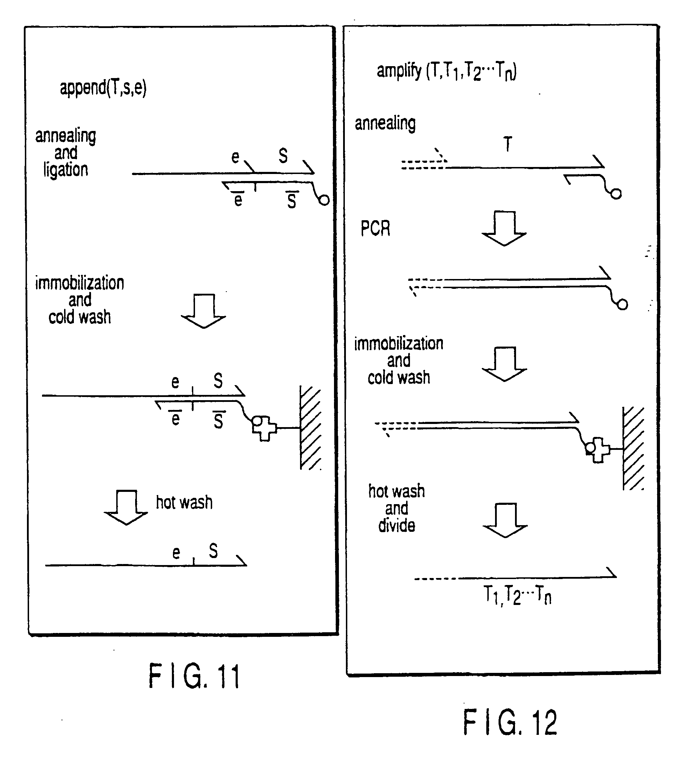

Now, the reaction of Function "append (T, s, e)" will be described in accordance with FIG. 11. The symbol "e" represents a variable which is defined to be associated with coding molecules obtained by coding molecules based on a nucleic acid sequence.

This function is a function wherein reaction operation in which in a solution mixture T of oligonucleotides, an oligonucleotide having the sequence s is ligated to the 3' end of a single stranded DNA having an sequence e at the 3' end, and in this manner, a single stranded oligonucleotide having the sequence s ligated thereto can be obtained, is defined as operational reaction of coding molecules. Here, the sequence s and the sequence e are specific sequences comprising several nucleotides or several tens oligonucleotides, as mentioned above.

Next, the oligonucleotide is used in reaction of this Function "append (T, s, e)".

The oligonucleotide of the sequence s whose 5' end is phosphorized. 5' end of the ligation oligonucleotide is labeled with biotin. The ligation oligonucleotide includes a sequence complementary to the sequence s (at the 5' end) and a sequence complementary to the sequence e (at the 3' end), the sequences being arranged next to each other. These oligonucleotides are placed in a tube T, and reaction is initiated. The ligation oligonucleotide is hybridized with a target oligonucleotide sequence e and oligonucleotide sequence s to make hybrids. The hybridization reaction is performed at a relatively high temperature so as not to make a mismatched hybrid. Subsequently, the hybrids are ligated by using enzyme having an activity and a high temperature such as Taq ligase. Thereafter, the resultant hybrid is captured by streproavidin magnetic beads or the like, and is washed (hot washed) at a high temperature at which the hybrid is dissociated. As a result, an oligonucleotide having the sequence s ligated at the 3' end can be recovered.

Next, according to FIG. 12, the reaction of Function "amplify (T, $T_1$, ... $T_n$)" will be explained. The reaction of Function "amplify (T, $T_1$, ... $T_n$)" is a reaction in which oligonucleotide contained in the reaction solution T is amplified by PCR reaction, oligonucleotide amplified and formed as a double strand is changed to single strand, and the resultant oligonucleotide is divided into "n" reaction solutions such as $T_1$, ... $T_n$. In the present embodiment, the oligonucleotide contained in the reaction solution T has a common sequence at both ends for use in amplification. All oligonucleotides contained in the solution T can be amplified by using a set of primers. Of the primers, the 5' end of a primer having a complimentary sequence to the 3' end of a target oligonucleotide, is attached with biotin. The oligonucleotide in the solution T is amplified by the common primer, and is captured by streptoavidin magnetic beads. The nucleotide captured by beads is washed at a high temperature such as 94°C such that the double strand is completely dissociated. As a result, the strand originally contained in the solution T can be extracted into a buffer solution. The extracted solution may be divided uniformly into "n" reaction solutions in $T_1$, ... $T_n$.

Function "merge" expresses a function in which reaction operation for collecting solutions with a plurality of arguments is defined as operational reaction of coding molecules.

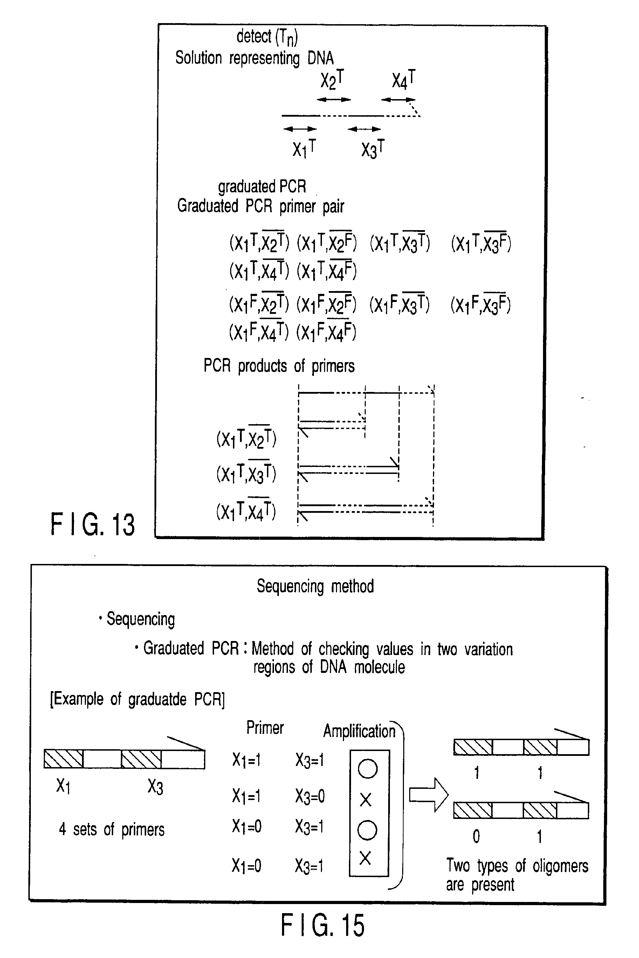

Finally, Function "detect" will be explained in accordance with FIG. 13. The "detection" can be executed by manually performing a reaction. Now, a method of executing Function "detect" by the computer of the present invention will be explained below. In this case, a so-called graduated PCR is employed, which is a detection means disclosed in a paper of Adleman (Science, 266, 1021-4).

In FIG. 13, the nucleic acid molecule showing a solution and generated by the computer of the present invention has a sequence having 4 variables expressing T (true) or F (false) which are ligated from the 5' end. The sequence of the solution is individually amplified by a PCR reaction using primers (shown in FIG. 13), which are capable of detecting all possible solutions. In the figure, a horizontal line drawn above a sequence denotes a complementary sequence. Assuming that the sequence (in the uppermost stage) representing a solution is obtained, PCR products having the lengths shown in the figure can be obtained by a set of primers shown in the lowermost stage of FIG. 13. If the presence and absence of the products and the lengths thereof are checked by gel-electrophoresis, it is possible to know the sequence of a solution from the primer giving the PCR product. Function "detect" includes an output caused by a DNA chip.

The aforementioned functions are summarized in Table 1.

Table 1

| get (T, +3), get (T, -s) |
| --- |
| a DNA molecule containing (not containing) a partial sequence $\underline{s}$ is picked up from a test tube T |
| append (T, s, e) |
| Sequence $\underline{s}$ is added to the end of a DNA molecule satisfying a terminal end-condition $\underline{e}$ and present in a test tube T. |
| merge ($T_1$, $T_2$, $T_n$) |
| DNA molecules present in test tubes $T_1$ $T_2 \cdots T_n$ are combined. |
| amplify ($T_1$, $T_2$, $T_n$) |
| DNA molecules present in a test tube T are distributed into test tubes ($T_1$, $T_2$, $T_n$) without changing the concentration. |
| detect (T) |

DNA molecule present in a test tube T is detected.

The main function of the program shown in Equation 4 is "dna3sat". Function "dna3sat"includes the basic function described in the above and Function "getuvsat" formed on the basic function are incorporated. Thus, procedures or functions are newly defined by combining basic functions, making it possible to generate a program using the procedures or functions. First, variable names on the program will be described.

A symbol T is an abbreviation of a tube. $T_2$ is a solution containing oligonucleotides expressing 4 of all possible false/true combinations formed of 2 variables $x_1$ and $x_2$. $X_1^T$ is an oligonucleotide (of 22 nucleotides) representing that the value of $x_1$ is true. $X_2^F$ is an oligonucleotide (of 22 nucleotides) representing that the value of $x_2$ is false. $X_1^T X_2^F$, one of oligonucleotides contained in the solution $T_2$, is a single-stranded oligonucleotide (44 bases) representing assignment $x_1$=1 and $x_2$=0. Symbols $\underline{j}$ and $\underline{k}$ are integers representing which stage of the loop the operation proceeds. More specifically, the symbol "j" represents which clause of the logical equation of a problem the operation is performed. The symbol $\underline{k}$ represents which of variables is calculated. The symbols u, v, and w represent respective laterals of each clause of the logical equation. In the case of Equation 2, the literals are $u_1 = x_1$, $v_2 = x_2$, and $w_1 = \neg x_3$. The line above sequence name X represents that the sequence is a complementary sequence. The T/F on the right and upper side of sequence name X represents T and F, representing $X^T$ and $X^F$.

Now, the program shown in the above Equation 4 will be explained in order. In practice, an experimental design is made by the program interpreting portion in the operation section 14. More specifically, the program interpreting portion develops a program function, conditional branch, and a "for" loop into a series of experimental operations. The logical equation of a problem is modified in advance to make processing easier by arranging the order of literals in the ascending order of subscripted letters of variables in each clause. In addition, a solution $T_2$ is prepared so as to contain 2 variables $x_1$ and $x_2$ to which possible assignment is made.

In Function dna3sat, an initial "for" loop, k=3, that is, a loop for determining a value to be assigned to $x_3$, will be explained. First, $T_2$ is amplified by Function "amplify". In this case, after amplification, $T_2$ is distributed into $T_w^T$ and $T_w^F$ having the same oligonucleotide. Three solution tubes are obtained in total. Subsequently, the operation goes to "for loop" of "j" within the "k" loop. Herein, sufficiency of the "j" th clause of the logical equation is evaluated. At the first conditional branch, provided that j=1, the third literal $w_1$ of the first clause is equal to $x_3$ is checked. To explain more specifically, the logical equation is previously checked in the electronic operation section 21 to determine whether or not the operation of "then" onward is performed, thereby determining whether the operation of "then" onward is added to the experimental design. In the case where the third literal $w_1$ of the first clause is equal to $\neg x_3$ at the 2nd conditional branch within the loop, the operation of "then" onward is executed.

Function "getuvsat" is separately defined in the lower step, $T_w^T$ tube containing an oligonucleotide (the content and concentration are the same as those of $T_2$) and produced by initial amplification is input to each of arguments, T.

$U_1(=x_1)$ is input to u, and $v_1(=x_2)$ to v. A first $T_u^T$ solution is prepared by extracting an oligonucleotide containing $X_1^T$ from the $T_W^T$ solution. In this manner, the content of the solution $T_u^T$ is $\{x_1^T X_2^T, X_1^T X_2^F\}$. Second, a solution $T'_u{}^F$ is prepared by extracting an oligonucleotide not containing $X_1^T$ from the solution $T_w^T$. In this manner, the content of $T'_u{}^F$ is $\{X_1^F X_2^T, X_1^F X_2^F\}$. Third, a solution $T_u^F$ is prepared by extracting an oligonucleotide containing $X_1^F$ from the solution $T'_u{}^F$. In this manner, the content of $T_u^F$ is $\{X_1^F X_2^T, X_1^F X_2^F\}$. In the program, there is a line reading "*can be omitted*". However, it is apparent from the content of the solution prepared. Since this line is added so as not to generate an experimental error. The operation of this line is executed for precautionary purposes. When this line is omitted, $T'_u{}^F$ must be substituted by $T_U^F$. Fourth, a solution $T_v^T$ is prepared by extracting an oligonucleotide containing $X_2^T$ from the solution $T_U^F$. In this manner, the content of $T_v^T$ is $\{X_1^F X_2^T\}$. Finally, $T_u^T$ and $T_v^T$ are mixed to prepare a $T^T$ solution by Function "merge" and output by Function "return". As a result, the $T^T$ solution becomes $\{X_1^T X_2^T, X_1^T X_2^F, X_1^F X_2^T\}$. The $T^T$ solution is renamed $T_w^T$ and subjected to Function "dna3sat". The content of the $T^T$ solution is a set for assignment for $x_1$ and $x_2$. Since the first clause is $x_1 \vee x_2$ ($x_1$ and $x_2$ are first literal and second literal), even if the third literal $\neg x_3$ takes any value. From the above, Function "Getuvsat" screens an oligonucleotide showing assignment such that the clause exhibits true even if any value is assigned to the variable of the third literal of the clause where values have been assigned to two literals.

Next, in the k=3 loop of Function dna3sat, the value of j is incremented by one, that is, under the condition of j=2, the operation goes to the second clause. In this clause, since the third literal is $\neg x_3$ in the same as the in the first clause, the line which affects the conditional branch is "if-sentence" of the following step. Function "getuvsat" is executed in the same manner as in the first clause. In this case, care must be taken to the fact that $T_w^T$ has been already produced in the previous step of j=1. In addition, $v_2$ is a literal including "negation", that is, $v_2=\neg x_2$. Therefore, in the equation for obtaining $T_v^T$ of Function "getuvsat", Function "get" is executed by substituting $X_v^T$ by $X_2^F$. In this case, the value of $T_w^T$ newly obtained in the case of j=2 results in $\{X_1^T X_2^T, X_1^T X_2^F\}$.

In the same manner as mentioned above, the operation repeats until j=10. During the operation, for example, 5th clause onward, in the case where the third literal is k=4, the value of "j" is incremented, to thereby operate the next operation of the loop. After the operation of the loop corresponding to 10 clauses is completed, $X_3^T$ expressing "true" is appended to the oligonucleotide of the 3' end, $X_2$ of $T_w^T$. Furthermore, $X_3^F$ expressing "false" is appended to the oligonucleotide of the 3' end, $X_2$ of $T_w^F$. After these solutions obtained after the "append" operation, are merged and the operation goes to a loop of k=4. After completion of the k=4 loop, the operation exits from the loop. The solution of $T_4$ tube is processed by Function "detect".

Since the calculation is performed as mentioned above, provided that the number of variables is $\underline{n}$ and the number of clauses is $\underline{m}$, the execution number of each of basic commands is given by the following equation:

$$(n-2) \times (amplify + 2 \times append + merge) + m$$

$$\times (3 \times get + merge)$$

This equation means that 3SAT problem is solved for time period substantially in proportional to the numbers of variables and clauses.

Furthermore, in the present invention, the "detect" portion does not always used for measuring the reaction results. The detect portion may be preferable if reaction results can be transmitted to the electronic operation section 21 while they maintain their availability as they are or they may be changed or extracted into the forms which can be used by an operator. In addition, the "detect" portion may be preferable if it is in the measurable conditions. The measurement may be performed by an operator. Accordingly, in the present invention, the molecular operation section 22 may provide products or results which can be used by an operator upon completion of the reaction. The products or results provided by the computer of the present invention can be most efficiently applied to diagnoses, treatments, drug designs, scientific studies, construction of biological data bases, and interpretation of biological information.

[Examples]

1. Molecular operation

The above described program of Equation 4 was performed by using the molecular computer of the present invention. A configuration of the computer is described below. A configuration of the computer performing the program is shown here. This computer was fabricated by modifying a nucleic acid automatic extraction device SX8G available from Precision System Science (PSS). This computer is comprised of: an electronic computer whose OS is Window98 mounting control Pentium IIICPU available from Intel Co., Ltd. (corresponding to the electronic operation section 21) and a reaction robot (corresponding to the molecular operation section 22). The reaction robot is comprised of a reagent vessel and a reactor for actually performing operational reaction; a pipette capable of XYZ position control; a preliminary pipette; and a thermal cycler (PTC-200 available from MJ Research Co., Ltd.). Disposition of a reaction member from the top of the molecular operation section 22 is shown in FIG. 9.

A solution was transferred between the reaction vessels. An oligonucleotide was extracted with streptoavidin beads by using a specific tip of the pipette and a permanent magnet which moved closer to or moved away from the tip. However, two operations were not performed within the aforementioned system. One is adding a small amount of enzyme (e.g., about 1 μL), which was manually performed. The other is capillary-gel electrophoresis by Function "detect", which was performed by a P/ACE-5510 capillary electrophoresis system (manufactured by Beckman · Corlter).

Reagents and the initial arrangement of the reagents will be described. Since ligase enzyme was dispensed by hand as described above, it was stored outside the apparatus. The enzyme was added by a pipette "pipetto-man" 2 μL(manufactured by Gilson) was used.

Reference numeral X indicates the length of the oligonucleotide indicating a variable. In this case, the oligonucleotide is formed of 22 nucleotides. The "$X_1^T X_2^F$" means an oligonucleotide in which $X_1$ and $X_2$ are arranged in this order from the 5' end. $X_1^T$ herein is an oligonucleotide indicating that the sequence $X_1$ is "true". $X_2^F$ herein is an oligonucleotide indicating that the sequence $X_2$ is "false". If the name of a sequence is surrounded by parentheses [ ], the sequence is a complementary sequence to the original sequence. More specifically, $[X_1^T x_2^F]$ denotes a sequence complementary to $X_1^T X_2^F$. Actually, the sequence consists of a sequence complementary to $X_2^F$ and a sequence complementary to $X_1^T$ which are arranged in this order from the 5' end.

A $T_2$ solution (5 pmol of each of $X_1^T X_2^T$, $X_1^F X_2^T$, $X_1^T X_2^F$, $X_1^F X_2^F$ was dissolved in 20 μL of a ligation buffer solution) was stored in MTP 35 (multi-titer plate 35). A buffer solution for a ligation reaction, streptoavidin magnetic beads, a B & W solution was stored in MTP 37 shown in FIG. 9. The B & W solution contained 1M NaCl in TE solution. The B & W solution was used by capturing a biotin-labeled oligonucleotide by streptoavidin magnetic beads and used in a hybridization reaction.

In MTP 35, placed were biotinylated oligonucleotides (whose 5' end was labeled with biotin), append oligonucleotides (whose 5' end was phosphorylated) and biotinylated ligation oligonucleotides (whose 5' end was labeled with biotin). The biotinylated oligonucleotides $[bX_1^T]$, $[bX_2^T]$, $[bX_3^T]$, $[bX_4^T]$, $[bX_1^F]$, $[bX_2^F]$, $[bX_3^F]$, $[bX_4^F]$ were prepared by dissolving 10 pmoL of each of the biotinylated oligonucleotides in 20 μL of B & W solution. The append oligonucleotides $pX_3$, $pX_3^T$, $pX_3^F$, $pX_4^F$, $pX_4^T$, were prepared by dissolving 10 pmoL of each of the append oligonucleotides in 20 μL of ligation buffer solution. The biotinylated ligation oligonucleotide $[bX_2^T X_3^T]$, $[bX_2^F X_3^T]$, $[bX_2^T X_3^F]$, $[bX_2^F X_3^F]$, $[bX_3^T X_4^T]$, $[bX_3^F X_4^T]$, $[bX_3^T X_4^F]$, $[bX_3^F X_4^F]$ were prepared by dissolving 10 pmol of each of the biotinylated ligation oligonucleotides in 20 μL of ligation buffer solution. These oligonucleotide solutions and buffer solutions were stored at room temperature during the operation of the molecular operation section. Ligase, PCR polymerase for use in Function "detect" were stored in ice outside the device. The buffer solution for PCR reaction is stored at room temperature.

The operation of the device in the reaction corresponding to each Function will be explained in order.

(a) Function "amplify"

The Function "amplify" is a function in which reaction operation for using a solution of an argument at the left end as a template, PCR-amplifying the solution, maintaining the solution at a concentration of the original solution, and dividing the solution into a plurality of solutions is defined as operational reaction of coding molecules. In the strict sense, the oligonucleotide should be amplified after the oligonucleotide concentration of the original solution was measured. Actually, 5 pmol of each oligonucleotide was dissolved in 20 μL of the $T_2$ solution in the initial step. Therefore, the concentration of each solution was set so as to contain several pmol of each oligonucleotide in 20 μL of the solution. More specifically, assuming that the concentration of an oligonucleotide per solution is 2 pmol, the composition of a PCR reaction solution is as follows:

| | |
|---|---|
| Polymerase enzyme (Takara Shuzo Co., Ltd.) | 0.5 μL (2.5U) |
| Solution for DNA amplification | containing about 1 fmol of each oligonucleotide |
| dNTP solution mixture | 8 μL (2.5 mM, appendix) |
| Reaction buffer | 10 μL (10 X dilution, appendix) |
| Primer | 5 pmol of each of forward and reverse primers per oligonucleotide |

(continued)

| Sterilized distilled water | Added up to a total amount of 100 μL |
| --- | --- |

Amplification was performed by using a Pyrobest™ DNA polymerase PCR amplification kit (Takara Shuzo Co., Ltd.). The reaction temperature conditions were as follows:

1. 95°C for 30 seconds
2. 50°C for 30 seconds
3. 72°C for 60 seconds

A cycle of 1-3 steps was repeated for 30 times.

The amount of PCR solution was varied depending upon the number of solutions to be divided. After PCR, a PCR product was captured by streptoavidin magnetic beads (Roche diagnostics) from the PCR reaction solution. 50 μL (0.5 mg) of magnetic bead original solution was taken and magnetic beads only were fixed by a magnet from the magnetic bead original solution. The magnetic bead original solution was replaced with 50 μL of the B & W solution. The magnetic bead solution thus prepared was mixed with 50 μL of the PCR reaction solution to capture a PCR product. While the PCR product was captured, the solution was replaced with 50 μL of the B & W solution and heated to 88°C to dissociate a single-stranded oligonucleotide to get it. The operation mentioned above was not performed by an experimental apparatus but manually performed.

(b) Function "get"

Get (T, +S) and get (T, -S) were simultaneously performed in a series of operations.

(1) 50 μL of extraction solution T was prepared and supplied to thermal cycler 38

(2) 50 μL of the B & W solution containing 20 pmol of biotinylated oligonucleotide which was complementary to a target sequence was further added to the solution T. In this manner, a first hybridization reaction was performed (in accordance with the following reaction conditions, 1 and 2). An aliquot was taken by a pipette from each of MTPs and a reaction was allowed to proceed under the reaction temperature conditions:

1. 95°C for one minute
2. 25°C for 10 minutes (the temperature is decreased at a rate of 10°C/minute from step 1 to step 2)
3. 56°C for 3 minutes (the temperature is increased at a rate of 10°C/minute from the step 2 to step 3)
4. 75°C for 3 minutes (the temperature is increased at a rate of 10°C/minute from step 3 to step 4)

In accordance with the aforementioned menu, the thermal cycler was controlled while providing a sufficient time for pipetting.

(3) In the middle of step 2 of decreasing the temperature, 50 μL of the B & W solution in which 50 μL of the magnetic bead original solution was dispersed, was mixed to capture a hybrid of the biotinylated oligonucleotide on the magnetic beads. The magnetic beads were again returned to 96-hole MTP38 of the thermal cycler.

The magnetic bead solution was once suctioned by the pipette of the apparatus and then stored in a space of the tip of the pipette. At the time, a movable permanent magnet attached to the pipette was approached to the tip storing the magnetic bead solution to collect beads. While colleting the beads, the solution was discharged from the pipette and a fresh solution was sucked. In this way, the solution was substituted with the fresh solution and the double stranded nucleic acid was dissociated into complementary strands. To dissolve the magnetic beads into the solution, pipetting was performed for a few times while staying the permanent magnet away from the tip. In this operation, the magnetic beads were sufficiently stirred and dispersed in the magnetic bead solution.

(4) The operation goes to the temperature conditions 3. In the step 3, cold wash was performed to collect an oligonucleotide unhybridized. The oligonucleotide was extracted into 50 μL of the B & W solution at 56°C and output into the MTP 35. In this way, an output oligonucleotide solution corresponding to get (T, -S) was obtained.

(5) In the hot-wash step of the temperature condition 4, the temperature was further increased. The oligonucleotide captured by the magnetic beads was extracted into 50 μL of the B & W solution in the same manner as in the cold wash, and then output into MTP 35. In this way, an output oligonucleotide solution of get (T, +S) was obtained.

(c) Function "merge"

This Function was executed by an extremely simple pipetting operation. More specifically, the solutions to be mixed were sucked by a pipette and collectively placed in a single well of an MTP and mixed them.

(d) Function "Append"

The reaction is shown in FIG. 1. The "Append" reactions of different oligonucleotides were simultaneously performed in different reaction tubes.

(1) 20 µL of the solution to be subjected to the append reaction was sucked by a pipette from the MTP 35 and supplied into the thermal cycler 38. In addition, the following solutions required for the "append" reaction was transferred to the reaction well 38.

In the append reaction, Taq ligase and a specific buffer solution (New England Bio Labs) were used.

The reaction solution is as follows:

| Taq ligase (NEB) (Takara Shuzo Co., Ltd.) | 0.5 µL (20 U) |
|---|---|
| Reaction solution of DNA | original solution: 20 µL |
| Ligation buffer | 12 µL (10X dilution is used, appendix) |
| ligation oligonucleotide | 10 pmol for each |
| "Append" oligonucleotide | 10 pmol for each |
| Sterilized distilled water | Added up to a total amount of 120 µL |

(2) A ligation reaction was performed. The thermal cycler was controlled as follows. The ligation reaction was performed under the temperature condition 2. The reaction temperature conditions are as follows:

1. 95°C for one minute
2. 58°C for 15 minutes (the temperature is decreased at a rate of 10°C/minute from step 1 to step 2)
3. 25°C for 10 minutes (the temperature is decreased at a rate of 10°C/minute from the step 2 to step 3)
4. 70°C for 3 minutes (the temperature is increased at a rate of 10°C/minute from step 3 to step 4)
5. 74°C for 3 minutes (the temperature is increased at a rate of 10°C/minute from step 4 to step 5)
6. 88°C for 3 minutes (the temperature is increased at a rate of 10°C/minute from step 5 to step 6).

(3) After the temperature was decreased to 25°C in the reaction temperature condition 3, the capturing operation was performed by the magnetic beads. At this time, the solution dispersing the magnetic beads was discarded, a ligation buffer solution was directly sucked by a pipette from the thermal cycler 38 while the beads were stored in a tip. More specifically, the capturing reaction was performed in the ligation buffer solution. Since the buffer solution is not a specific solution for capturing reaction, sucking and discharging were performed for 60 times as a precaution, to obtain a sufficient performance of capturing. The obtained magnetic beads were stored in the thermal cycler 38.

(4) Subsequently, first cold wash was performed. Based on the length of the nucleic acid hybrid and the salt concentration of the solution, the cold wash was preferably performed at 70°C. When the temperature increased to 70°C in step 4, the magnetic bead solution was sucked from the thermal cycler 38. The magnetic beads was collected by a permanent magnet and the solution alone was discharged into the MTP 35. The solution was a waste.

(5) 50 µL of the B & W solution of the MTP 37 was sucked by a pipette and the magnetic beads was dispersed in the B & W solution by moving away the permanent magnet. The resultant solution was returned into the thermal cycler 38. In the thermal cycler 38, second time cold wash was performed at reaction temperature 5. In the same manner as in the step (4), when the temperature reached an ideal value, the solution was sucked from the thermal cycler 38 and the beads were collected by a permanent magnet. Thereafter, only the B & W solution was discharged into the MTP 35. The B & W solution was a waste.

(6) Thereafter, 50 µL of the B & W solution in the MTP 37 was sucked again by a pipette. The magnetic beads were dispersed in the B & W solution by leaving away the permanent magnet and returned into the thermal cycler 38. When the B & W solution reached the reaction temperature 6 in the thermal cycler 38, a single-stranded oligonucleotide was dissociated from the "append" reaction previously performed. The dissociated single-stranded oligonucleotide was sucked from the thermal cycler 38 and the beads were collected by the permanent magnet. Only the solution was discharged into MTP 35 and stored therein.

(e) Function "detect"

Function "detect" was executed by the reaction shown in FIG. 13 and the detection by capillary gel electrophoresis. Graduated PCR was performed by using the finally obtained solution which might contain an oligonucleotide exhibiting a solution, as a template. PCR was performed by dividing the reaction solution depending upon primer sets. The sequence of the solution was checked by detecting the presence/absence and the length of a PCR product for each primer set.

(1) The oligonucleotide solution which might contain a solution, was used as a template. Since the concentration of oligonucleotide was maintained by "amplify" in the program, the concentration of the template was estimated from the concentration of oligonucleotide. Based on the estimation, the amount of the solution was determined.

The composition of the PCR solution is:

| Polymerase enzyme (Takara Shuzo Co., Ltd.) | 0.5 µL (2.5U) |
| --- | --- |
| DNA Solution to be amplified | containing about 1 fmol of each oligonucleotide |
| dNTP solution mixture | 8 µL (2.5 mM, appendix) |
| Reaction buffer | 10 µL (10 X dilution, appendix) |
| Primer | 5 pmol of each of forward and reverse primers per oligonucleotide |
| Sterilized distilled water | Added up to a total amount of 100 µL |

Amplification was performed by a Pyrobest DNA polymerase PCR amplification kit ((Takara Shuzo Co., Ltd.).
The reaction temperature conditions were as follows:

1. 95°C for 30 seconds
2. 50°C for 30 seconds
3. 72°C for 60 seconds

A cycle of 1-3 steps were repeated for 30 times.
The primers used in this experiment are the following 12 sets:

$(X_1^T, [X_2^T])$, $(X_1^T, [X_2^F])$, $(X_1^T, [X_3^T])$, $(X_1^T, [X_3^F])$, $(X_1^T, [X_4^T])$, $(X_1^T, [X_4^F])$, $(X_1^F, [X_2^T])$, $(X_1^F, [X_2^F])$, $(X_1^T, [X_3^T])$, $(X_1^F, [X_3^F])$, $(X_1^F, [X_4^T])$, $(X_1^F, [X_4^F])$.

These were stored in different wells of the MTP 35. At the PCR reaction, the primer solution was sucked by a pipette and discharged into different wells of the thermal cycler 38. After the solution required for the PCR reaction was added, the thermal cycler 38 was operated as designed. In this manner, the reaction was completed. This operation can be easily performed automatically. The loading of a sample into a capillary in the capillary gel electrophoresis device can be performed automatically. In the capillary gel electrophoresis, ds1000 gel kit (manufactured by Beckmann/Coalter) was used.

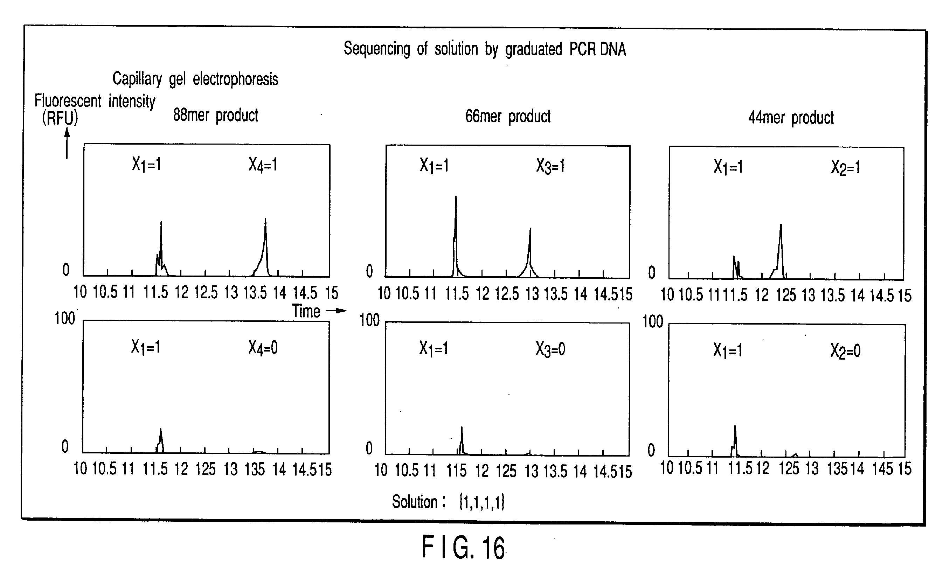

Since the primer $X_1^T$ was labeled with FITC, an electrophoresis image was observed. In the "detect" operation mentioned above of this embodiment, the capillary electrophoresis was not performed automatically but manually performed. The results obtained by executing individual functions of the program in the method mentioned above, are shown in FIG. 16. For example, a method of identifying a sequence which corresponds to function "detect" is shown if FIG. 15.

To demonstrate the efficiency of operation paradigm such as genomic information analysis by a molecular computer, an experiment was performed by analyzing the gene expression by using DNA computer. The calculation was performed by using basic commands "get", "append", "amplify", "merge" and "detect", which were usually used when 3SAT problem was solved by dynamic programming. The first operation reaction was an encode reaction, which was performed in a single test tube. The information of a transcriptional product of a gene was converted into DCN by "append" command. The conversion cable was expressed by an adapter molecule Ai. The transcriptional product of a gene is converted one-by-one to combination of 2 sets of DCNs of a base-n number system. 200 types of DCNs are used as 2-sets of centesimal DCNs, thereby 10,000 types of genes can be encoded by DCNs. Thereafter, amplification is performed by "amplify" command and the amplified product is distributed into $\underline{n}$ test tubes. Finally, the $\underline{n}$ test tubes were subjected to a decode reaction of DCN by "append" and "get" commands. The decode reactions of the $\underline{n}$ test tubes were performed simultaneously. When an experiment was performed by using a transcriptional product of transplanted fragment-to-host disease as cDNA input data, it was demonstrated that the calculation reaction was performed specifically and quantitatively.

The method of analyzing gene expression by operating DCN by the DNA computer has several advantages compared to the method of directly analyzing a transcriptional molecule by a DNA chip. First, since gene information is converted into DCNs having the uniform nature, it is possible to analyze the DCN after amplifying it without changing an original frequency of gene expression. As the DNA chip for performing "get" command simultaneously in parallel in the DCN decode reaction, the same DNA chip may be used as long as calculation is performed by using the same DCN code-conversion system. Second, the number of DNA probes can be significantly reduced. Therefore, labor and cost for preparing a DNA chip can be greatly reduced. Furthermore, the hybridization reaction of an orthonormal probe is optimized, so that calculation can be performed accurately. Further, there is no need to label a transfer product molecule, and an error caused by a deviation of its efficiency does not occur. In addition to these advantages, a variety of information analysis concerning a profile as well as mere measurement of an expressed profile can be performed by DNA computation.

Although the five basic functions (Function "amplify", Function "get", Function "merge", Function "append", and Function "detect") have been exemplified above, the present invention is not limited to these functions. For example, Function "encode", Function "decode", Function "cleave" and the like are effective to define computation at the molecular computer.

Function "encode" is a function for, when a molecule including a specific sequence $\underline{s_i}$ exists in a test tube T containing molecules, outputting a sequence $\underline{c_i}$ which corresponds thereto on a one to one base. This function is expressed by "encode $(T, s_1, s_2, ..., s_n, c_1, c_2, ..., c_n)$", for example.

Function "decode" is a function for, when a molecule including a specific sequence $\underline{s_i}$ exists in a test tube T containing molecules, outputting a molecule which includes a sequence complementary to the sequence $\underline{c_i}$ adjacent to the specific sequence $\underline{s_i}$ This function is expressed by "decode (T, si)", for example.

Function "cleave" is a function for, when a molecule including a specific sequence $\underline{s}$ exists in a test tube T containing molecules, cutting the molecule including a specific sequence $\underline{s}$, and this function is expressed by "cleave (T, s)", for example. This Function "cleave" exists in two ways. A first one is a function for cutting a molecule in the test tube T by the specific sequence $\underline{s}$, and a second one is a function for cutting a sequence distant by a specific number of chlorides from the specific sequence in the test tube T containing molecules. This Function "cleave" is defined as cutting of a limited enzyme at the molecular operation section 22.

Of course, there is no need to cause expression using the only eight basic functions including these three basic functions, and the other basic functions can be set.

Table 2 below shows an expression of a processing system at the electronic operation section 21 and an expression of a processing system at the molecule operation section 22. The processing system at the molecular operation section 22 is not limited to that shown in Table 2, and is provided as one aspect of expressing the processing system at the electronic operation section 21.

As shown in Table 2, basic functions (procedures or functions) are defined to be associated with operational reaction of coding molecules. Variables and constants are defined to be associated with coding molecules coded obtained by coding a molecule based on a nucleic acid sequence.

Table 2

| Basic functions | Electronic operation section | Molecular operation section |
| --- | --- | --- |
| get | This function selects a sequence including a specific character string or selects a character string that does not include such specific character string. | This function performs aspiration to or separation from magnetic beads by hybridization. |
| append | This function appends a character string to a character string that meets a specific condition. | This function performs ligation reaction or connection using a complementary sequence. |
| merge | This function permits a summation set of a character string set to be obtained. | This function performs mixing of a tube liquid in one tube. |
| amplify | This function divides a character string set into a plurality of sets while its elements are kept unchanged. | This function increases DNAs in a tube by PCR reaction, and divides the increased DNAs into a plurality of tubes. |
| detect | This function acquires characteristics including the contents or length of a character string. | This function detect a DNA in a tube. |
| encode | This function acquires a character string that corresponds to a specific character on a one to one basis. | This function converts a sequence by ligation reaction and bead separation. |
| decode | This function acquires a character string adjacent to a specific character string. | This function acquires a complementary sequence in which a sequence adjacent to a specific sequence is labeled by ligation reaction. |
| cleave | This function divides a character string that includes a specific character string at a specific position. | This function performs cutting using a limited enzyme. |

EP 1 215 623 A2

According to the aspect of the present invention, the computer of the present invention takes advantages of not only the molecular computer which achieves high parallel computation, but also the electronic computer which complements the functions not be attained by the molecular computer. It is therefore not necessary for an operator to make an experimental design and to perform assignment of coding molecules for molecular computation.

Furthermore, if the gene analysis was performed by the computer of the present invention, it is possible to evaluate the presence or absence of a target nucleic acid having a specific sequence, and further determine the geno type and the expression state of a gene, based on the presence/absence evaluation, simply and at a low cost, while minimizing experimental errors.

Furthermore, the present invention provides the following method and a molecular computation software based on the above. More specifically, the present invention provides a molecular computation method characterized in that the electronic operation section and the molecular operation section are integrally operated based on the molecular information expressed in the form which is capable of being recognized by an electronic program.

The present invention further provides a software applicable to the molecular computer including the electronic operation section and the molecular operation section. The molecular computation software has a feature in that it can be applied to the electronic operation section and/or the molecular operation section, and that calculation operations of the electronic operation section and the molecular operation section can be performed by using data-form electrically recognizable by each operation section. To be specific, the present invention provides a molecular computation software having a function for converting the data obtained by calculation performed at the molecular operation section into data form which is applicable to an electronic program of the electronic operation section. To be more specific, the present invention provides a molecular computation software having a function for converting the data, which is obtained by calculation operation performed in the electronic operation section, into a data-form applicable to computation operation of the molecular operation section.

The computer of the present invention can be easily operated by using the molecular operation software of the present invention. The molecular operation software can be used if the computer of the present invention is integrally controlled, if a part of the structural element is independently controlled, or if some parts of the structural elements are controlled in combination.

II. Application Example of Gene Analysis

1. Outline

The inventors found a unique idea that gene analysis is handled as computation in which a nucleic acid molecule is used as input data. This idea can be achieved by using the molecular computer shown in section I. For example, an expressed mRNA and a gene on a genome are converted into data on, and logical summation, logical product, and negation of these data are computed, whereby genotype determination or gene expression conditions can be obtained.

First example to third example shown below are achieved by applying the molecular computer shown in section I.

2. First Example Where Molecular Computer Is Applied to Gene Analysis

Examples of problems suitable to the molecular computer according to one aspect of the present invention include: a purely mathematical problem such as an NP complete problem or 3SAT; a problem that input data is given as a nucleic acid molecule as in genome information analysis; and a problem that design on functional molecules and functional evaluation are hardly performed by an electronic computer; and the like.

A further example of genome information analysis to be performed by the molecular computer is shown here. First, genome information is converted into a system which is a number expressed by an orthonormal sequence DNA nucleotide. Then, DNA computation relevant to the DCN is performed in the same way as when a mathematical problem is purely solved, and genome information is analyzed from the operation result as well.

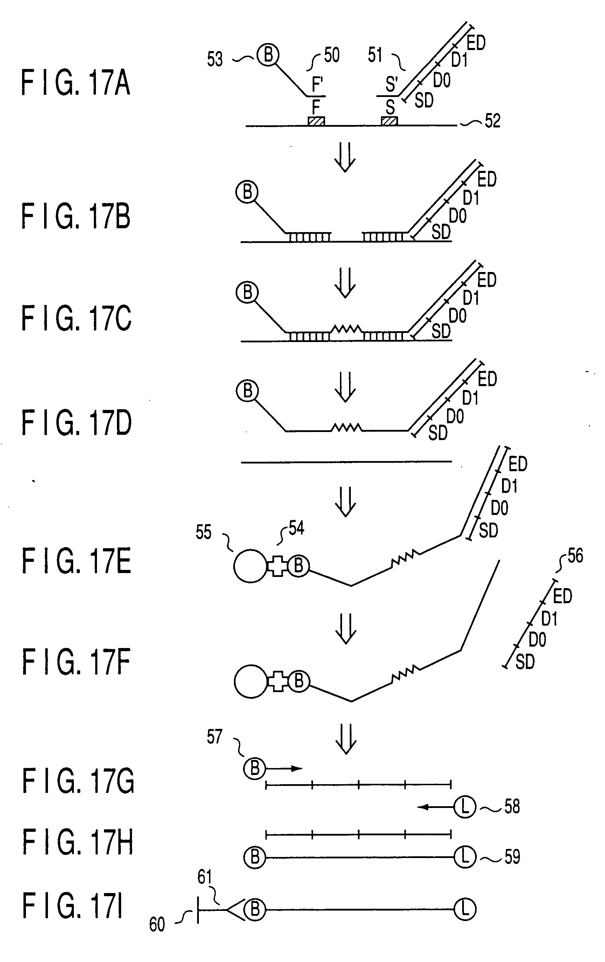

In this method, two types of nucleic acid probes as shown below, i.e., probe A and probe B, are used (FIG. 17A).

Probe A is formed of a sequence F', which is complementary to a partial nucleotide sequence F of a target nucleic acid, and a binding molecule.

The binding molecule used herein is one of two substances having a high affinity with each other. Examples include biotin, avidin, streptoavidin and the like. The binding molecule may be directly bind to the sequence F' or indirectly bind to the sequence F' via an arbitrary sequence. As the arbitrary sequence used in the indirect binding, any nucleotide sequence having any number of nucleotides, may be used. Preferably non-complementary sequence to the nucleotide sequence of a target nucleic acid may be used.

Probe B is formed of a sequence S', which is complementary to a partial nucleotide sequence S of the target nucleic acid, and a flag. The flag used in the embodiment is formed of a double strand. The double strand refers to an arbitrary sequence formed of a plurality of units. The Flag neither binds to the target nucleic acid nor exhibits any interaction thereto.

The sequences F' and S' to be used in the method of the present invention have at least one nucleotide, more preferably, at least 15 nucleotides.

The design of the units of a flag FL are shown in FIG. 12. Each of a plurality of units constituting a flag FL may contain at least 10 nucleotides, more preferably, about 15 nucleotides. The number of units of the flag FL is not limited but preferably 4 units in consideration of analysis. However the present invention is not limited to these condition.

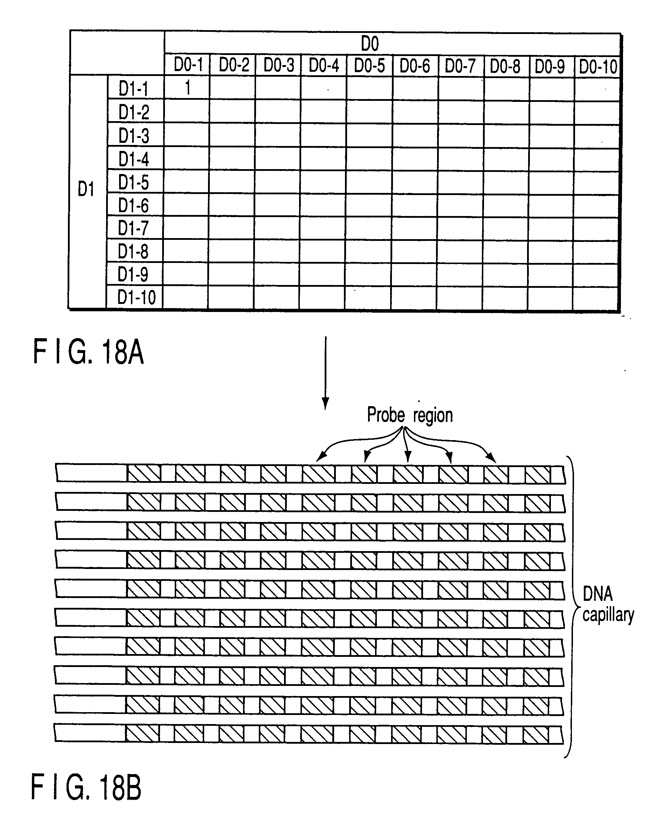

When a plurality of target nucleic acids are simultaneously detected, the flag FL is constructed by combining a plurality types of units. For example, the case where the flag FL of 4 units, SD, D0, D1 and ED, is designed, first, 22 types of units are designed. Of them, two types of units are selected. One is used as an SD unit serving as a primer. The other is used as an ED unit serving as another primer. Units D0, D1 are designed so as to differ depending upon the types of the target nucleic acids by selecting them from the remaining 20 types of units. As a result, 100 types of different nucleic acid sequences can be detected (FIG. 18A).

It is preferable to design 22 types of units by using orthonormal nucleotide sequences. The orthonormal nucleotide sequences have almost equal Tm values. Each of the orthonormal nucleotide sequences is also designed so as no stable hybrid can be formed with a sequence except for the complementary sequence. In addition, no stable secondary structure is formed, so that a hybrid formation with the complementary sequence will not be inhibited. In this way, the rate of mishybridization can be reduced at the time of final detection. As a result, the detection accuracy can be improved and the detection time can be shortened. If the number and types of units are increased, it is possible to detect different nucleic acid sequences of 10000 types.

Referring now to FIGS. 17A to 17I, the method of the present invention will be further specifically explained. FIG. 17A shows a flag FL consisting of 4 units. The 4 units include an SD unit, D0 unit, S1 unit and ED unit. The SD unit and ED unit serve as primers in a polymerase chain reaction (hereinafter, referred to as "PCR amplification" or "PCR"), The D0 unit and D1 unit serve as recognition portion for recognizing a type of target nucleic acid. Each of the units is used as a reading frame in a later step.

Detection is performed by blending the probe A and probe B with a target nucleic acid (FIG. 17A). The target nucleic acid contained in a sample used herein may contain a plurality of target nucleic acid molecules. In this case, if the types of the target nucleic acids to be detected are 100 types or less, D0 unit is selected from 10 types of D0-1 to D0-10 units and D1 unit is selected from 10 types of D1-1 to D1-10 units (FIG. 18A).

Subsequently, probe A and probe B are incubated for a predetermined time under the conditions suitable for hybridization to thereby perform hybridization (FIG. 17B). The hybridization conditions are as shown in Example 1.

By the hybridization reaction thus performed, both probe A and probe B bind to the same target nucleic acid (FIG. 17B).

Subsequently, probe A and probe B hybridized to the target nucleic acid are ligated (FIG. 17C). The ligation conditions are as shown in Example 1.

The Tm value of a flag FL is set at a temperature higher than those of sequence F' and S'. This is made to prevent denaturation of the flag (which deteriorates sensitivity) in heating or cooling step at the time of hybridization, ligation and denaturation reaction.

Then, the obtained information of the flag FL is subjected to B/F separation. To be more specific, the binding molecule of a probe (A+B) is bonded to a solid carrier via another binding molecule paired up with the binding molecule (FIG. 17E).

As the solid carrier, a substrate, particles such as beads, container, fiber, tube, filter, affinity column, and electrode may be used. Of them, beads are preferably used.

Then, the flag FL of probe (A+B) captured by the binding molecule is denatured as it is to obtain a single strand (FIG. 17F). The obtained single-stranded sequence FL' contained in a liquid phase is subjected to PCR amplification (FIG. 17G). Since two primer sequences SD and ED are arranged in the flag FL, as mentioned above, the PCR amplification can be readily performed by use of the primer sequences. In this case, it is preferable that biotin be bounded to one of the two primers, for example, the SD sequence. The detained PCR conditions vary depending upon a designed FL.

After completion of the PCR reaction, the double stranded PCR product is recovered by binding it to the binding molecule fixed on the solid carrier(FIG. 17H). The solid carrier is a substance which can pair up with the binding molecule. Further, the sequence FL' is removed by denaturation. As a result, a single-stranded sequence FL alone is recovered on the solid carrier (FIG. 17I).

Subsequently, the single-stranded flag sequence FL on the carrier is analyzed. First, the solid carrier having a single stranded flag sequence FL bound thereto is divided into 10 fractions (D1 unit consists of D1-1 to D1-10). One of sequences D1-1' to D1-10' tagged with a marker molecule and all D0' sequences (DO-1' to DO-10') are added to allow D0' sequences and the selected D1 sequence to hybridize to the flag sequence FL.

Subsequently, the two nucleic acid molecules hybridized are ligated. In this case, the ligation conditions and the marker substances are as defined above. Thereafter, the ligated molecule is recovered in a liquid phase by denaturation.

The obtained labeled nucleic acid molecule is analyzed by hybridizing it to a DNA chip or a DNA capillary in which nucleic acid molecules D0-1 to D0-10 have been fixed on a solid phase. The DNA chip is disclosed in EP patent publication No. EP935210A2, PCT patent publication No. WO98/53092, and U.S. Patent No. 5,843,767, all publications are incorporated by reference herein. The DNA capillary is disclosed in EP publication No. EP969083A1, the contents of which is incorporated by reference herein. Particularly, the DNA capillary is useful, since 10 reactions of D0-1 to D0-10 can be treated at the same time. It the DNA capillary is used, the analysis can be performed more easily.

As an example, the case of the flag FL which is designed by using 10 types of sequences, D0-1 to D0-10, and 10 types of sequences, D1-0 to D1-10 will now be explained. Since the sequence D0-1 is immobilized at position 1 of FIG. 18A, the nucleic acid molecule 63 ligated to a D1-1' molecule labeled with a marker molecule, is hybridized with the sequence D0-1 at position 1. Similarly, since a D0 sequence is immobilized to a corresponding position $n$ of the column, the nucleic acid molecule ligated to the D1' molecule (i.e., a molecule corresponding to a row) is hybridized with the position $n$ of the column. If such a matrix arrangement is applied to the DNA capillary described later, the analysis can be readily performed (FIG. 18B).

In this example, 10 types of units are used. The types of units are not limited to 10. Less than 10 and more than 10 may be used.

The "DNA capillary" used herein is a device for detecting a target nucleic acid. In the DNA capillary, a complementary sequence to the target nucleic acid is fixed. In this device, the target molecule may be detected by binding it to the complementary sequence.

As shown in FIG. 18B, if a plurality of DNA capillaries having different probes (arranged at hatched portions) are simultaneously used, a plurality of target nucleic acids can be detected at the same time.

In the method of this example, since an orthonormal nucleotide sequence is used as each unit of the flag sequence FL, hybridization can be uniformly performed under the same conditions, e.g., a reaction temperature. Therefore, the detection can be made with a high accuracy while preventing mis-hybridization. Furthermore, since numerous analyses can be performed simultaneously under the same conditions, the time required for the detection can be reduced.

According to the method of the present invention, complicated genomic information expressed by a nucleotide sequence of DNA can be converted into numerical values. Moreover, if calculation is made by using a DNA molecular reaction, analysis of various types of information and complicated genetic information mutually associated can be easily made. In addition, after a nucleic acid is encoded, the nucleic acid can be amplified based on the code. Therefore, even if the target sequences are present in low copy numbers, the target sequences can be accurately and quantitatively detected. Furthermore, it is possible to compress numerous data by encoding the sequence. Therefore, detection can be made by using a fewer number of devices, such as a DNA chip or a capillary array.

The "encode reaction" used herein refers to converting a nucleotide sequence to a code represented by orthonormal nucleic sequences. The encode reaction is performed in the steps of FIG. 17A to 17F.

The "decode reaction" used herein refers to reading the code which has been converted as mentioned above, thereby reproducing the original information. The decode reaction is performed in the steps of FIG. 17A to 17I.

In this method, it is possible not only to detect one type of target nucleic acid as mentioned above and but also detect a plurality of types of target nucleic acids by performing the same process using a plurality of types flag sequence designed.

3. Second Example Where Molecular Computer Is Applied to Gene Analysis

According to another aspect of the present invention, nucleic acid analysis is disclosed. In this analysis, the nucleic acid can be analyzed base on a computation using the above described molecular computer. According to still another aspect of the present invention, a general methodology for genomic information analysis based on the computation using nucleic acids. In particular, the genomic information analysis has the following advantages. First, a desired molecule having a nucleotide sequence arbitrarily designed is assigned to the nucleotide sequence of a specific gene. In accordance with the aforementioned assignment manner, specific nucleic acid sequences are represented by the arbitrarily designed sequences. Since the designed sequences have substantially an equal heat stability, they can be efficiently used in operation. If this method is employed, the reaction conditions can be set with a high degree of freedom, and the reaction can be accurately performed.

(a) First embodiment

(1) Outline

The first embodiment in which the present invention is applied to a gene analysis will be explained. The first embodiment shows a gene analysis for determining the presence or absence of a gene by performing an operation using nucleic acids.

The analysis will be outlined below. First, a cDNA group is prepared based on a gene group expressed in a cell. Information regarding an expressed gene contained in the cDNA group thus prepared and an unexpressed gene not contained in it, more specifically, information on the presence/absence of a target gene is converted into another expression form such as a DNA molecule having an artificially designed sequence. The DNA molecule obtained by data conversion is hybridized to an operation nucleic acid. The operation analysis is performed in accordance with the aforementioned process. The DNA molecule used herein acts as a kind of signal which represents the presence/absence of a specific gene of interest. For example, if the presence of the target gene is confirmed, it can be determined that the target gene is actually expressed. Conversely, if the absence of the target gene is confirmed, it can be determined that the target gene is not expressed. Accordingly, in this analysis method, it is possible not only to detect the target molecule contained in a sample but also to obtain the information that the target gene is not present in a sample.

(1.1) Preparation

In the computation method according to one aspect of the present invention, the following molecules must be prepared before a computation is virtually performed. The molecules are prepared by a known method.

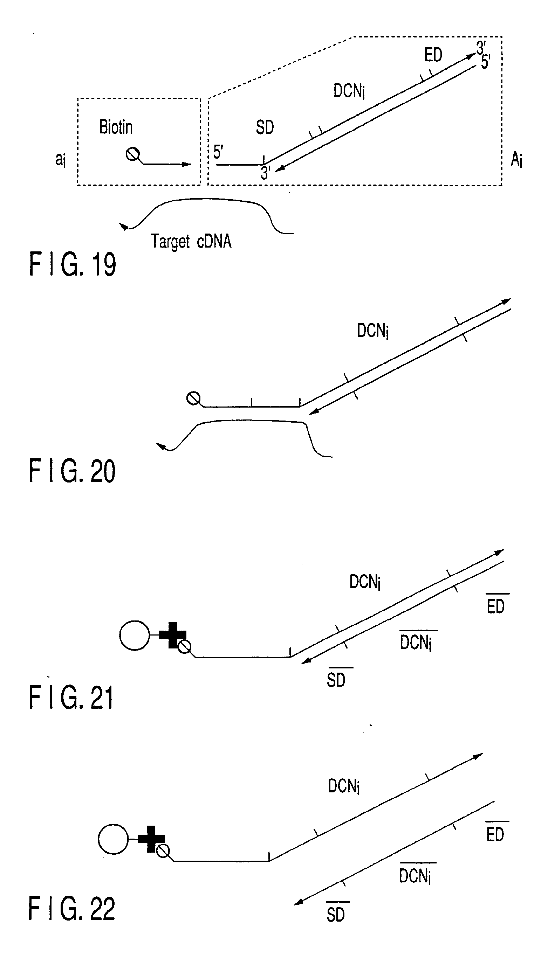

First, two probes, namely, $a_i$ and $A_i$, (surrounded by a broken line in FIG. 19) are prepared for detecting a cDNA molecule contained in a solution. Probe $a_i$ is an oligonucleotide containing a sequence complementary to a part of the sequence of a target cDNA. The 5' end of Probe $a_i$ is labeled with biotin. Probe $A_i$ is an oligonucleotide partially having a double-stranded region due to hybridization. Of the double strands, one has artificially designed sequences, SD, $DCN_i$ and ED, at a side near the 3' end, and a sequence which is complementary to a part of the sequence of the target cDNA at the 5' end. It is desirable that the nucleotides complementary to the 5' end of the sequence $A_1$ and the nucleotides complementary to the 3' end of the sequence $a_1$ should be arranged on the target cDNA next to each other. Furthermore, the nucleic sequences artificially designed (SD, $DCN_i$ and ED) are arranged at a site closer to the 3' end than the aforementioned complementary sequence. The 5' end of the strand of Probe $A_1$ having the complementary sequence to the target cDNA, is phosphorylated. The other strand constituting the double strand $A_i$ region is an oligonucleotide having complementary sequences to the SD, $DCN_i$ and ED. The probes $a_i$ and $A_i$ are arbitrarily designed with respect to every target gene to be detected. The term "target gene" used herein is a gene whose presence/absence is to be detected in a solution. The sequence $DCN_i$ is designed such that it varies depending upon a target. In this case, SD and ED sequences are common in all probes $A_i$. These artificial sequences can be arbitrarily designed. This means that the Tm value of these sequences can be set at a desired value. Since the heat stability of the sequences can be set at the same in this manner, a hybridization reaction can be performed with little occurrence of mishybridization.

Furthermore, primers 1, 2 (shown in FIG. 23) are required. The primer 1 has the same sequence as the SD sequence whose 5' end is labeled with biotin. The primer 2 has a complementary sequence to the ED sequence (see FIG. 23).

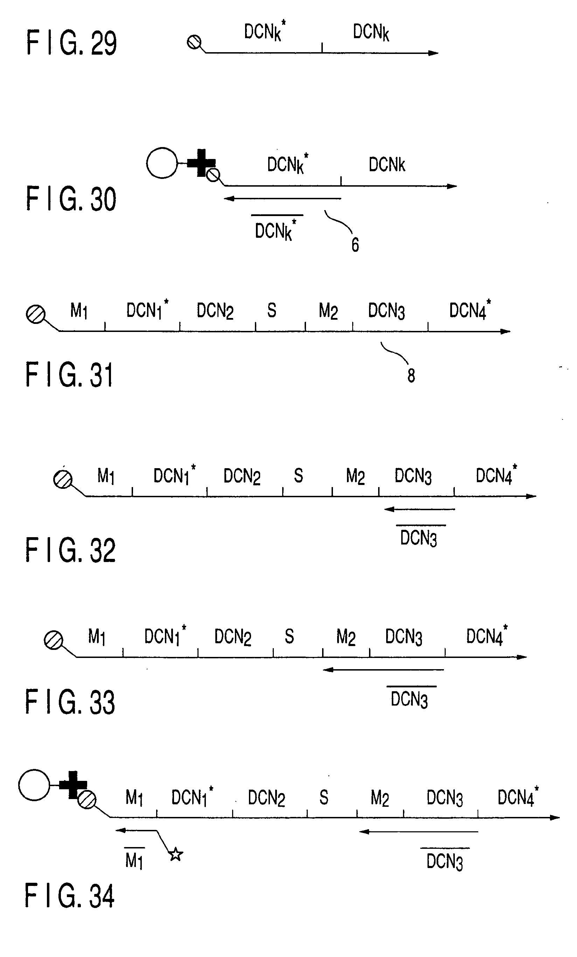

Moreover, an oligonucleotide 3 (FIG. 26) and an oligonucleotide 6 (FIG. 30) are required. The oligonucleotide 3 (hereinafter referred to as a "presence oligonucleotide") has a complementary sequence to $DCN_i$ indicating "a target is present". The oligonucleotide 6 (hereinafter, referred to as an "absence oligonucleotide") has a complementary sequence to $DCN_i{}^*$ indicating "a target is absent".

In addition, a inverted oligonucleotide 4 (shown in FIG. 27) is required. The oligonucleotide 4 has $DCN_i{}^*$ and $DCN_i$ sequences in the order from the 5' end. The $DCN_i{}^*$ sequence is a nucleotide sequence artificially designed so as to correspond to $DCN_i$ based on a predetermined rule and different in sequence from the $DCN_i$.

(1. 2) Conversion to the presence molecule and absence molecule

In the method of the present invention, the information "a specific target molecule is present in a sample" is represented by the "presence molecule", whereas the information "the specific target molecule is not present in the sample" is represented by the "absence molecule". The term "presence molecule" used herein and the term of "presence oligonucleotide" can be interchangeably used. Similarly, the terms "absence molecule" and "absence oligonucleotide" can be interchangeably used.

Now, the information of the presence/absence of a molecule is converted into the presence or absence molecule in accordance with the method shown in FIGS. 19 to 30. FIGS. 19 to 40 schematically show molecules present in a system of each step.

In the figures, DNA is indicated by an arrow. The proximal end of the arrow is the 5' end of DNA and the distal end of the arrow is the 3' end. The nucleotide sequence is partitioned by a short perpendicular line(s). Names of sequences are represented by alphabets such as "a", "A", and "DCN" arranged near the arrow in the figures. Alphabets such as "i" and "k" additionally attached to alphabets "a", "A", and "DCN" are integers. An arbitrary sequence is indicated by the alphabets "i" or "k" and the correspondence between sequences are shown by the integer of "i" or "k". For the sake of convenience, alphabet "i" indicates an expressed gene and alphabet "k" indicates an unexpressed gene. On the other hand, the line drawn above the name of a sequence indicates a complementary sequence. A hatched circle indicates a biotin molecule. A large open circle indicates magnetic beads. A solid cross placed at a right-hand side of the magnetic beads schematically indicates a streptoavidin molecule capable of specifically binding to the biotin molecule fixed on the magnetic beads.

a. Conversion of the information "target is present" into the "presence molecule"

When the tart is present, the information "target is present" is converted into the "presence molecule" by sequential steps of FIGS. 19 to 37.

Referring now to FIG. 19, the probes $a_i$ and $A_i$ (synthesized as mentioned above) are reacted with a target cDNA in a reaction buffer containing an enzyme, such as Taq ligase, maintaining a high activity at a high temperature. The ligation reaction is performed at a temperature at which a double-stranded region of the $A_i$ oligonucleotide is not dissociated. When the target cDNA is present, the probes $a_i$ and $A_i$ are ligated by the action of Taq ligase as shown in FIG. 20 after the reaction. Next, the ligated $a_i$-$A_i$ oligonucleotide is extracted by the magnetic beads having streptoavidin bonded on the surface, from the reaction solution, as shown in FIG. 21. At that time, an unreacted $a_i$ molecule is captured by the beads but will not be participated in a later reaction.

Subsequently, a complementary strand of the $A_i$ portion is extracted by isolating it from the $a_i$-$A_i$ ligation molecule (captured by the magnetic beads) with heat application (FIG. 22). If cDNA is present in an initial solution, it is possible to extract the oligonucleotide containing a complementary sequence to a $DCN_i$ sequence corresponding to the cDNA, by the aforementioned operation (FIG. 22). Using the extracted oligonucleotide as a template, a PCR amplification reaction is performed as shown in FIG. 23 by use of two primers. One of the two primers has an identical sequence to SD and labeled with biotin at the 5' end. The other has an identical sequence to ED (FIG. 23). As a result, the $DCN_i$ sequence (which proves the presence of a target gene) is amplified.

The double-stranded PCR product is captured by streptoavidin-fixed magnetic beads, as shown in FIG. 24 (FIG. 24). Heat is applied to the double-stranded PCR product thus captured, thereby dissociating it into single strands. The complementary strand thus dissociated is removed by exchanging a buffer solution (FIG. 25). Subsequently, as shown in FIG. 26, the presence oligonucleotide having a complementary sequence to $DCN_i$ is hybridized with the PCR product captured by the beads (FIG. 26). After the hybridization, presence oligonucleotides excessively present are removed. Subsequently, heat is applied again to the hybridized PCR product. As a result, the complementary strand (namely, presence oligonucleotide 3) to $DCN_i$ is extracted into a buffer from the strand captured by the beads.

The presence oligonucleotide 3 having a complementary sequence to the $DCN_i$ extracted herein is the "presence molecule" indicating the presence of a target gene in the original cDNA solution.

b. Conversion of the information "a target is absent" into the "absence molecule"

In the step a, the information "the target gene is present" is converted into the presence molecule (presence oligonucleotide) indicating that the target gene is present. Thereafter, the information "the target gene is absent" is converted into the absence molecule (absence oligonucleotide). When the target gene is not present, the absence oligonucleotide is extracted. The extraction is performed as follows:

First, a inverted oligonucleotide 4 (as shown in FIG. 27) is prepared with respect to DCN of the target gene. As mentioned above, the inverted oligonucleotide 4 is artificially prepared so as to correspond to $DCN_i$. The inverted oligonucleotide also has a nucleotide sequence, $DCN_i^*$ at the 5' end side and $DCN_i$ at the 3' end side of $DCN_i^*$. The sequence $DCN_i^*$ is artificially designed so as to correspond to $DCN_i$ based on a predetermined rule and differs in sequence from $DCN_i$. When the presence/absence representing oligonucleotide is subjected to a hybridization reaction with the "presence molecule", the information "a target is absent" can be converted into a detectable "absence molecule".

The hybridization reaction is performed as shown in FIG. 27. First, the presence oligonucleotide 3 ($DCN_i$) which corresponds to an expressed gene and extracted in the step of FIG. 26, is hybridized to the inverted oligonucleotide 4. Thereafter, the hybridized $DCN_i$ is extended with polymerase (FIG. 27). As a result, $DCN_i$ (corresponding to the expressed gene) extends up to the end of the sequence of $DCN_i^*$ to synthesize a complementary strand (FIG. 27).

In contrast, when the target molecule is not expressed (indicated by $DCN_k$ herein), as shown in FIG. 28, the oligonucleotide complementary to $DCN_k$ is not present in a reaction solution. As a result, the inverted oligonucleotide 5 is present in a single-stranded form (FIG. 28). A mixture containing the double-stranded inverted oligonucleotide and the single-stranded inverted oligonucleotide is then loaded onto a column containing hydroxyapatite. As a result, the single-stranded inverted oligonucleotide 5 alone is extracted (FIG. 29).

The extracted inverted oligonucleotide 5 having $DCN_k$ (corresponding to the unexpressed gene) is captured by streptoavidin-bonded magnetic beads (FIG. 30). Next, in the same manner as in the case where the presence oligonucleotide 3 alone is extracted, an oligonucleotide 6 complementary to $DCN_k^*$ is hybridized. After oligonucleotides 6 excessively present are removed, only absence oligonucleotides 6 hybridized with $DCN_k^*$ (indicating that the gene is not unexpressed) can be extracted (FIG. 30).

The step of obtaining the absence oligonucleotide 6 can be also carried out as described below.

First, a fluorescent molecule such as FITC is labeled at the 5' end of the $DCN_i$ oligonucleotide. Thereafter, a hybridization reaction is performed on a DNA microarray containing a probe having a sequence complementary to $DCN_i$. The fluorescent molecule of the hybridization reaction is read out by a scanner. In this way, which $DCN_i$ is present can be detected. At the same time, $DCN_k$ (indicating that a target is absent) can be detected. Based on these data, the absence oligonucleotide 6($DCN_k^*$) is prepared which will be subjected to the following operation. From the aforementioned steps, the information that "a nucleic acid (target) is absent" can be converted into the "absence nucleic acid" (representing the absence of a target), which is designed so as to correspond to the target nucleic acid in accordance with a predetermined rule. From the aforementioned procedure, logic operation can be performed by using an operational nucleic acids.

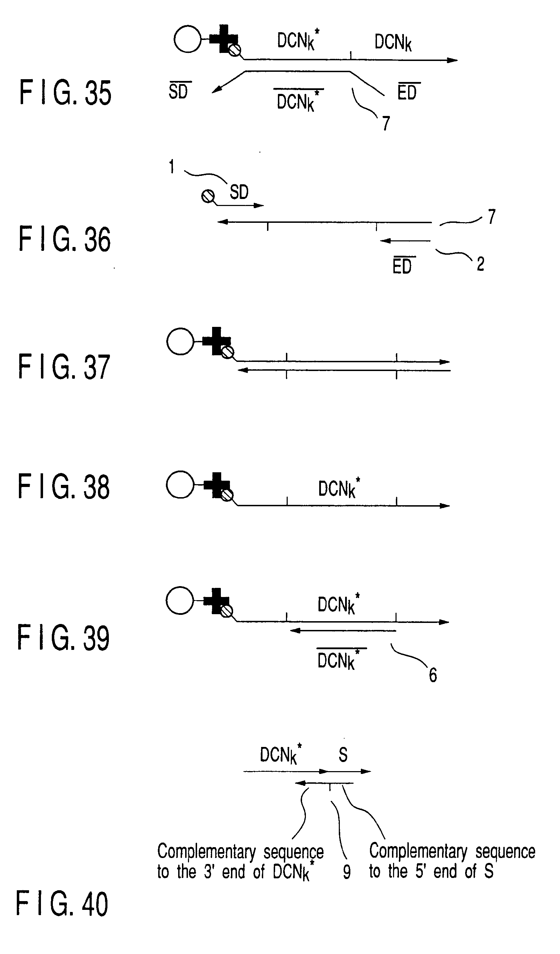

In the step of preparing the absence oligonucleotide 6, the absence oligonucleotide 6 may be amplified by using a single stranded inverted oligonucleotide 5 as a template. The amplification may be performed in accordance with the steps shown in FIGS. 35 to 40. In the figures, a molecule(s) is schematically shown. The detailed explanations of reference symbols within the figures are the same as described above. First, a single-stranded inverted oligonucleotide 5 is extracted in accordance with the step of FIG. 29. The inverted 5 is hybridized with an oligonucleotide 7. The oligonucleotide 7 has a sequence complementary to $DCN_k^*$ which is bonded to a sequence complementary to the SD sequence at the 3' end and a sequence complementary to the ED sequence at the 5' end. As a result, the absence oligonucleotide 6 is extracted. Subsequently, $DCN_k^*$ is amplified by the steps of FIGS. 35 to 40, in the same manner as in the case of amplifying the presence oligonucleotide 3. More specifically, in the step of FIG. 36, the oligonucleotide 7 (obtained in the step of FIG. 35) is amplified by primers 1 and 2. The primer 1 has the SD sequence labeled with biotin. The primer 2 has a sequence complementary to the ED sequence (FIG. 36). Thereafter, the resultant PCR product is recovered by bonding biotin to a streptoavidin molecule (FIG. 37). Subsequently, heat denaturation is performed to convert the PCR product into a single-stranded PCR product (FIG. 38). Subsequently, the absence oligonucleotide having a sequence complementary to $DCN_k^*$ is hybridized to the PCR product captured by beads (FIG. 39). After the hybridization, the absence oligonucleotides excessively present are removed. Heat is applied again to extract a complementary strand to $DCN_k^*$ (absence oligonucleotide 6) captured by beads into a buffer. The absence oligonucleotide 6 extracted represents that a target gene is not present in an original cDNA solution.

(1. 3) Operation step

In the operation step, the presence molecule and the absence molecule obtained above are hybridized to the operational nucleic acid, and then, a complementary strand of the hybridized molecule is synthesized. According to this method, parallel computation is performed by solving an operation expression expressing desired conditions to thereby obtain a solution satisfying the operational conditions.

As an example, Equation 1 is used as an operation expression. Specific sequences, $DCN_1$, $DCN_2$, $DCN_3$ and $DCN_4$ are target sequences. Equation 1 is a logical equation indicating the conditions as to the presence and absence of the target sequences. Equation 1 is operated based on the hybridization reaction of the operational nucleic acid with the presence molecule and the absence molecule and extension of the hybridized molecule. The obtained values are evaluated. Equation 1 expresses desired conditions as to the presence and absence of $DCN_1$, $DCN_2$, $DCN_3$ and $DCN_4$. In brief, solving Equation 1 of the present invention means that the presence and absence of the target sequences in a sample are identified simultaneously.

Equation 1

$$(DCN_1 \wedge \neg DCN_2) \vee (\neg DCN_3 \wedge DCN_4)$$

where "$\neg$" denotes "negation", "$\wedge$" denotes "AND", "$\vee$" denotes "OR".

When the predetermined conditions for the operational nucleic acid are satisfied, the value of Equation 1 becomes "1" that is, "true". Alternatively, when the conditions are not satisfied, the value of Equation 1 becomes "0", that is "false". The present invention achieves basic logical "XOR". Therefore, all logical operations which are defined by Boolean Algebra can be performed by using these combinations.

FIG. 31 shows a sequence structure of an operational nucleic acid 8. The operational nucleic acid 8 is a single-stranded oligonucleotide (shown by an arrow in the figure). The arrow proceeds from the 5' end to the 3' end. A biotin molecule is attached to the 5' end. The operational nucleic acid 8 includes a plurality of units. The units (nucleotide sequences) are $M_1$, $DCN_1*$, DCN2, S, $M_2$, $DCN_3$, and $DCN_4*$, which are arranged in this order from the 5' end. M1 is a sequence to which a marker molecule is to be linked. $DCN_1*$ is a sequence for detecting the oligonucleotide which is obtained when $DCN_1$ is absent. S is a stopper sequence which terminates extension of a complementary strand by polymerase. $M_2$ is a sequence to which a second marker is to be attached. The arrangement order of the sequence units of the operational nucleic acid almost corresponds to that of the items of the logical equation. "Negation" of the logical equation is also expressed by the sequence itself. To explain more specifically, in the case where the presence of the "$DCN_4$" sequence is denied, the sequence "$DCN_4*$" is used. The sequence "$DCN_4*$" used herein is artificially designed so as to correspond to the sequence "$DCN_4$" mentioned above. Logical "OR" is expressed by the sequence S. However, a specific sequence expressing logical "AND" is not used on the operational nucleic acid. When the conditions are satisfied as shown in Table 3, value 1 is obtained as calculation results of the operational nucleic acid. In the Table 3, a symbol "-" denotes that either "expressed" or "unexpressed" is acceptable.

Table 3

| $DCN_1$ | $DCN_2$ | $DCN_3$ | $DCN_4$ | Value |
|---------|---------|---------|---------|-------|
| expressed | unexpressed | - | - | 1 |
| - | - | unexpressed | expressed | 1 |

Now, the logical operation is performed by carrying out nucleic acid reactions. The steps of the nucleic acid reaction shown in FIG. 32 to FIG. 34 will be explained. The operation reaction is performed in accordance with the following procedure. Operation is performed in accordance with Equation 1, an operational nucleic acid having the sequence units (shown in FIG. 31) is prepared. A single tube contains a single type of operational nucleic acid. To the tube, a solution containing both the presence oligonucleotide and the absence oligonucleotide is added, and a hybridization reaction is performed (FIG. 32). Assuming that $DCN_1$, $DCN_3$ and $DCN_4$ are present and $DCN_2$ is absent, the operational nucleic acid is hybridized with $DCN_3$ alone (FIG. 32). Furthermore, after the hybridization reaction, an extension reaction is performed with an enzyme, Taq polymerase, having an activity even at a high temperature, under the conditions causing no mishybridization. As a result, the extension reaction proceeds up to $M_2$ sequence unit and stops at the S sequence. The region from $DCN_3$ to $M_2$ is double-stranded (FIG. 33).

Next, after completion of the reaction, the operational nucleic acid is captured by the streptoavidin magnetic beads (FIG. 34). Finally, a marker oligonucleotide is hybridized to the operational nucleic acid as a detection reaction (FIG. 34). FIG. 34 shows the operational nucleic acid fixed on a carrier beads. A biotin molecule at the 5' end of the operational nucleic acid is linked to a streptoavidin molecule on the carrier beads. Furthermore, marker oligonucleotides $M_1$ and $M_2$ are prepared which are complementary to marker detection sequences. A fluorescent molecule is attached to the 5' end of each of these marker oligonucleotides $M_1$ and $M_2$. In this case, the $M_1$ sequence of the operational nucleic acid is not double stranded, the marker oligonucleotide can be hybridized to the operational nucleic acid (FIG. 34). After unbound marker oligonucleotides are removed, the fluorescence of the beads is checked. Since the marker oligonucleotide $M_1$ is hybridized and emits fluorescence in this case, the result of the operation, that is, value of the logical equation, becomes "1".

In the aforementioned example, the S sequence is used as a stopper. However, the S sequence is not necessarily arranged. In place of the S sequence, an artificially-designed nucleotide may be used. The artificially-designed nucleotide has a base whose complementary strand cannot be formed. In this case, S sequence or the artificially-designed nucleotide is flanked with other units of the operational nucleic acid. For example, the artificially-designed stopper nucleotide is designed such that a cytosine base is included in it but not included in the other sequence units. In this case, the extension reaction (performed , as shown in FIG. 33) on an operational nucleic acid stops at the artificially designed nucleotide if a dGTP (described later) is not added as a building-block monomer in the extension reaction performed thereafter. Alternatively, the stopper sequence may be constituted of a guanine-cytosine continuous bases. This is because a polymerase extension reaction tends to stop at the guanine-cytosine continuous bases. Moreover, PNA complementary to the S sequence may be previously hybridized to the operational nucleic acid. The DNA/PNA hybrid is more stable than a DNA/DNA hybrid. Therefore, if a polymerase having a 5' exonuclease activity is used, the PNA cannot be removed. Therefore, the S sequence formed of the DNA/PNA hybrid works as a stopper.

Furthermore, many types of fluorescent pigments may be attached to the marker oligonucleotide. Up to present, since many fluorescent pigments have been developed, difference nucleic acids may be labeled with different fluorescent pigments, respectively. If this method is employed, a large number of operational nucleic acids can be distinguishably labeled at the same time. For example, if $M_1$ maker oligonucleotide and the $M_2$ marker oligonucleotide are labeled with different fluorescent pigments in the embodiment, it is possible to know which condition within parenthesis of the logical equation is satisfied based on which fluorescent pigment is detected. Moreover, different marker sequences are used depending upon operational nucleic acids and marker oligonucleotides are labeled with different fluorescent molecules, different operation reactions of a plurality of types of operational nucleic acids can be simultaneously performed in a single tube. On the other hand, the intensity of fluorescence increases in proportional to how sufficiently the logical equation (expressed by an operational nucleic acid) is satisfied. Hence, it is possible to know the satisfactory level of the logical equation.

To obtain the operation results, the following technique may be employed. In the step of amplifying the presence oligonucleotide and absence oligonucleotide, if a PCR reaction is performed in sufficient number of cycles until the amplification reaches saturation, binary logical operation can be made by using two values: "1" representing "presence" and "0" representing "absence". On the other hand, if the amplification is performed so as not to reach the saturation, that is, if the number of cycles for the PCR reaction is limited so as to obtain the PCR product in an amount proportional to an original amount of cDNA, the logical equation can be evaluated as to the probability in the zone of [0, 1]. For example, in the case of an expressed gene, the results are obtained in proportional to the expression amount of the expressed gene. In the case of a genomic sequence, it is possible to know the probability whether the genomic sequence is a hetero zygote or a homozygote, based on the operational results.

Furthermore, operational nucleic acids may be fixed on a substrate in the form of micro spots like a DNA microarray. The addressing of the micro spots may be made such that the positions of the microspots correspond to the logical equation(s) of the operational nucleic acids. In this case, the marker oligonucleotide is preferably tagged with a fluorescent label. If the operation reaction mentioned above is performed by using operational nucleic acids fixed on the microarray, the operation results can be read out by a readout scanner of a DNA microarray.

The marker oligonucleotide may be labeled with biotin. In this case, biotin is not attached to the 5' end of the operational nucleic acid. Instead, the operational nucleic acid may include a restriction enzyme recognition sequence for cloning at the 3' end and the 5' end. In addition, the step of capturing the operational nucleic acid by streptoavidin-magnetic beads (shown in FIG. 34) is not performed in the reaction. The detection herein is performed by hybridizing a marker oligonucleotide to the operational nucleic acid, capturing both marker oligonucleotides hybridized and nonhybridized to the operational nucleic acid by streptoavidin-magnetic beads, cloning the captured operational nucleic acids, and reading out the sequences by a sequencer. By this step, the operational nucleic acid(s) giving the operation result "1" is identified. If the operation is made in this manner, the reactions of a plurality of types of operational nucleic acids can be performed in a single tube.

In this embodiment, four target sequences are used. However, more than 4 target sequences may be used. Furthermore, biotin and streptoavidin are used herein as tags for use in recovering. However, the tags are not limited to them. Any substances may be used as a tag as long as they exhibit a high affinity with each other.

(b) Second embodiment

According to a preferable embodiment of the present invention, an orthonormal sequence may be used as a DCN sequence in the method of First embodiment. The term "orthonormal sequence" is a nucleotide sequence artificially designed. The term "normal" means that sequences have the same melting temperature ($T_m$). The term "ortho" means that no mishybridization occurs and that stable structure is not formed within a molecule.

For example, to obtain the orthonormal sequence of 15 nucleotides, first, sequences each consisting of arbitrary-chosen 5 nucleotides are prepared. The short sequence of 5 nucleotides is called "tuple". The types of tuples are $4^5=1024$. From the 1024 types of tuples, three tuples are selected and connected to each other to form a 15 nucleotide sequence. The tuples complementary to these three tuples employed herein will not used thereafter. When a set of 15 nucleotides is prepared, care must be taken to set the melting temperature of the 15 nucleotide sequence within ±3°C. In addition, it must be check on the possibility that the 15 nucleotide sequence will form a stable structure within the molecule. If it takes the stable form, such 15 nucleotide sequence must be eliminated.

Finally, all sequences of 15 nucleotides are checked as to the possibility that they will pair up with each other to form a double strand. The 15 nucleotide sequences thus prepared independently perform hybridization reactions at an appropriate temperature without forming a hybrid between them, even if they are used in a mixture. Hence, if nucleic acids $a_i$ and $A_i$ are constructed such that the orthonormal sequence corresponds to the nucleotide sequence of a specific gene based on a specific rule and subjected to the reaction to be performed in accordance with the first embodiment, the reaction conditions can be further simplified and thereby an operation reaction can be more accurately performed.

(c) Third embodiment

According to a preferable embodiment of the present invention, the method of the present invention can be used to check a genotype which is determined based on which nucleotide sequences are present at which loci. In this embodiment, the method of determining a genotype will be described.

First, a logical equation is set so as to correspond to the genotype. Based on the logical equation, an operational nucleic acid is designed. If the operational nucleic acid is used, it is possible to determine the genotype without using an electronic calculator and an evaluation table. For example, assuming that a gene having base A at locus 1, base T at locus 2, and base G at locus 3 can be determined as genotype A; a gene having base A at locus 1, base C at locus 2, and base T at locus 3 can be determined as genotype B; and a gene having base A at locus 1, base C at locus 2, base G at locus 3 can be determined as genotype C, logical equations satisfying the aforementioned three cases are shown in Table 4, the right end column.

Table 4

|  | Locus 1 | Locus 2 | Locus 3 | Logical Equation |
|---|---|---|---|---|
| Genotype A | A | T | G | $A \wedge T \wedge G$ |
| Genotype B | A | C | T | $A \wedge C \wedge T$ |
| Genotype C | A | C | G | $A \wedge C \wedge G$ |

Each of the genotypes is determined by performing an operation reaction using the operational nucleic acid corresponding to each logical equation. First, when a specific sequence is present at a locus, the value of a term of the logical equation is set at "1", and when it is absent, the value is set at "0". In this case, if the total value of the equation results in 1, the genotype represented by the equation is the evaluation result. If the method of the present invention using nucleic acids in operation, it is possible to determine a genotype without using a complicated table and an electronic computer, in the case where the gene has many loci but the number of genotypes is extremely low.

(d) Fourth embodiment

According to a preferable embodiment of the present invention, the method mentioned above can be used to check whether each of genes of a cancer cell is placed in expression conditions or not. Compared to the first embodiment mentioned above, the third embodiment may be a so-called "inverse implication".

First, operational nucleic acids representing various logical equations are prepared. Each of the operational nucleic acids has terms of a logical equation, namely, $DCN_i$, $DCN_i{}^*$, S, and M, whose 5' ends are individually phosphorylated. In addition to these operational nucleic acids, a complementary nucleic acid 9 for linkage as shown in FIG. 40 is prepared. The complementary nucleic acid 9 for linkage (ligation complementary nucleic acid) is used for ligating the terms of the logical equation. It is desirable that the ligation complementary nucleic acid 9 contain. sequences complementary to two portions sandwiching a partition portion to be ligated. These nucleic acids are hybridized to each other and ligated with ligase, it is possible to obtain an operational nucleic acid in which the terms of logical equation are connected to each other. If the sequence of the ligation complementary nucleic acid 9 is designed carefully, it is possible to prevent an improper logical equation from being formed.

The inverse implication is solved by using the operational nucleic acid as follows. First, cDNA is taken from a cancer cell and converted into sequences corresponding to terms of logical equation in accordance with the first embodiment. A logical operation is performed by using operational nucleic acids representing various logical equations prepared in advance. Finally, of the logical equations expressed by these operational nucleic acids, a satisfactory logical equation is detected. If there is the logical equation of the operational nucleic acid gives 1, the contents of the operational nucleic acid are analyzed and interpreted. In this way, it is possible to detect which gene is placed under an expression condition or a nonexpression condition. At least, the condition whether a gene is expressed or not can be partly known.

The sequence of an operational nucleic acid arbitrarily prepared is identified as follows. First, the reaction of the operational nucleic acid is performed in a single container. Then, the operational nucleic acid is recovered by a streptoavidin magnetic beads via a marker oligonucleotide attached with a biotin molecule according to the first embodiment. Subsequently, the operational nucleic acid molecule is subjected sequencing. In this manner, the contents of the operational nucleic acid can be read out, whereby a logical equation can be read out. Alternatively, an arbitrary operational nucleic acid may not be prepared. In this case, first, a logical equation is determined and then, the operational nucleic acid is synthesized in accordance with the method of preparing the operational nucleic acid by ligation. In practice, logical equations may be fixed on a DNA microarray by addressing them and the logical equations are identified at the time of detection. Alternatively, nucleic acids of the same type are placed in a single container to react them.

If these results of genes taken from a cancer cell are compared to those from a normal cell, it is possible to readily identify genetic diseases caused by combination of unknown genomic nucleotide sequences and casual genes of diseases such as cancers caused by abnormality of genes produced by combination of unknown gene expressions.

(e) Consideration

In the prior art, there is neither a technique nor an idea for converting the information "a specific nucleic acid is absent" into a nucleic acid expression. To detect the expressional state of mRNA, a DNA microarray is often used. In the DNA microarray, probes such as oligo DNAs, which have been designed based on the nucleotide sequence of a known gene, or cDNAs previously obtained, are fixed on a slide glass in the form of an array.

The gene-expression is detected on the microarray as follows. First, cDNA is prepared from mRNA. The cDNA is labeled with a fluorescent molecule and allowed to hybridize with a probe on the microarray. As a result, the cDNA with a fluorescence label bonds to a site at which a specific probe is fixed. Since fluorescence is emitted from the site, the site can be detected. However, when mRNA (gene) is not expressed, cDNA labeled with fluorescence cannot be prepared. This means that it is impossible to detect that the gene is not expressed. Unfortunately, mRNA happens to disappear during the experimentation in some cases. In other cases, it sometimes falsely determined that a gene is not present, even though the gene is expressed due to a low amount of fluorescent-labeled cDNA. Unlike such a conventional method mentioned above, the information that a gene is not expressed can be visualized in the method according to an embodiment of the present invention.

When nucleic acids of a gene are reacted, if numerous genes are copresent, nucleic acids make a hybrid in an unexpected combination. The structure of a double stranded nucleic acid can be stabilized if nucleic acids such as guanine and cytosine are contained in a larger number in the nucleotide sequence. However, the number of such nucleic acids varies depending upon the nucleic acids of a gene to be treated, the most suitable hybridization temperature differs. As a result, not all nucleic acids make an appropriate hybrid without a mismatch. In another case where there is a nucleic acid having a nucleotide sequence which takes a stable form within the molecule in a reaction mixture, such a nucleic acid lowers the reactivity with a target sequence. Therefore, the hybridization reaction may not proceed as expected in theory. Unlike such a conventional method, in the method according to the present invention, the reaction can be stably performed. This is because, in the present invention, information is first converted into the nucleic acid molecule designed under preferable conditions and then subjected to the reaction.

On the other hand, in a method using an enzyme associated with chemical luminescence, detection can be made accurately. However, the operation for detecting the chemical luminescence is nuisance and consumes much time. In addition, it is difficult to perform a plurality of chemical luminescence reactions in a single tube. On the other hand, when an operation is performed by use of an operational nucleic acid which gives the results based on a single color or luminescence, only one type of operational nucleic acid is reacted in a single tube. In contrast, according to an aspect of the present invention, it is possible to detect numerous target nucleic acids simultaneously and accurately.

In the conventional method, a logic equation which has been prepared only on the precondition that a nucleic acid is present, into an operational nucleic acid. However, problems usually present in the real world is a so-called "inverse implication". To be more specific, when genes are checked for their expression state in a genetic disease, which nucleic acid of a gene is present or absent when the genetic disease occurs is a matter of concern. Accordingly, what is important is to obtain a logical equation as to the presence or absence of the nucleic acid of the gene. Up to present, which gene is present or absent has been solved by subjecting data obtained from a DNA micro array to a cluster analysis using a large-scale computer. Therefore much time and cost are required for the cluster analysis. However, if the present invention is employed, it is possible to solve such a problem economically in a short time.

In this text, a gene analysis method are also described. However, the present invention enable to perform information processing by use of various type of parallel operations, within the scope of the present invention. In other words, it would be obvious to a person skilled in the art to understand that if the present invention is applied to parallel computation of data for solving mathematical problems other than gene analysis, excellent advantages can be obtained.

III. Other Application Example

As described above, according to one aspect of the present invention, there is provided a molecular operation method for performing molecular operation by chemical reaction of molecules, comprising:

converting variables and constants that are defined to be associated with coding molecules obtained by coding molecules based on a nucleic acid sequence and a program described by a function that is defined to be associated with operational reaction of the encoding molecules into a control command for driving a reaction control section that performs reaction control of chemical reaction of the molecule that corresponds to operational reaction of the coding molecule, thereby generating procedures for the control command;
outputting procedures for the control command to the reaction control section; and
performing reaction control of chemical reaction of molecules based on procedures for the control command.

In addition, in this aspect, attention is paid to the regularity of reaction of a nucleic acid sequence in chemical reactions of molecules, and the regularity is associated with operational reaction. Apart from the regularity of reaction of nucleic acid sequences, a chemical reaction generated based on the other biological and biochemical regularities of molecules is associated with operational reaction, thereby enabling similar molecular operation.

There can be used biological and biochemical substances other than nucleic sequences of the present invention, for example, biological and biochemical elements such as peptide, oligopeptide and polypeptide, protein, and antigen and antibody. In this case, a source program may be generated by: variables and constants that are defined by coding these elements to be replaced with nucleic acid sequences, and associating the sequences with these elements each; and a program described by a function defined to be associated with operation reaction of the coded elements.

It is verified that the following invention is included in this specification.

There is provided a molecular operation plan-designing apparatus for setting up a plan for molecular operation in which molecular operation is performed by chemical reaction of molecules, the apparatus comprising:

a control command generating section configured to convert a program described by variables, constants and functions into a series of control commands for driving a reaction control section (22) which performs reaction control of chemical reaction of molecules which correspond to operational reaction of the coding molecules, thereby generating control command procedures, wherein the variables and the constants being defined to be associated with coding molecules obtained by coding molecules based on biological properties or biochemical properties, and the functions being defined to be associated with operational reaction of the coding molecules; and
an output section that outputs the control command procedures.

**Claims**

1. A molecular computer comprising an electronic operation section (21) and a molecular operation section (22), **characterized in that**, in addition to general computation processing, said electronic operation section (21) controls a function of the molecular operation section (22) substantially, and the molecular operation is performed under control thereof.

2. A molecular computer for performing molecular operation by chemical reaction of molecules, **characterized by** comprising:

a molecular operation section (22) which has a reaction control section (22) for performing reaction control of chemical reaction of molecules; and
an electronic operation section which comprises;
a control command generating section (14a) configured to convert a program described by variables, constants and functions into a series of control commands for driving the reaction control section (22) which performs reaction control of chemical reaction of molecules which correspond to operational reaction of the coding molecules, thereby generating control command procedures, wherein the variables and the constants being defined to be associated with coding molecules obtained by coding molecules based on nucleic acid sequences, and the functions being defined to be associated with operational reaction of the coding molecules; and
an output section (20a, 20b, 23) configured to output the control command procedures.

3. The molecular computer according to claim 2, **characterized in that** said reaction control section (22) comprises:

a plurality of reaction control elements (152, 153, 154, 155, 156, 157, 159, 160) to be driven based on a drive signal, thereby performing reaction;
an automatic control section (151) which sequentially outputs drive signals to said plurality of reaction control elements (152, 153, 154, 155, 156, 157, 159, 160) based on the control command procedures input from said control command generating section (14a); and
a detection section (158) which detects the reaction results obtained in said reaction control elements (152, 153, 154, 155, 156, 157, 159, 169).

4. The molecular computer according to claim 2, **characterized in that** said reaction control section (22) comprises:

a plurality of reaction control elements (152, 153, 154, 155, 156, 157, 159, 160) to be driven based on a drive signal, thereby performing reaction;
an automatic control section (150) which sequentially outputs drive signals to said plurality of reaction control elements (152, 153, 154, 155, 156, 157, 159, 160) based on procedures for a control command input from said control command generating section (14a); and
a detection section (158) configured to detect the reaction results obtained in said reaction control elements (152, 153, 154, 155, 156, 157, 159, 160), and said reaction control elements (152, 153, 154, 155, 156, 157, 159, 160) include at least one of containers (153, 154, 155, 156, 157) which contain a nucleic acid solution targeted for reaction; a nucleic acid solution dispenser (152) configured to extract the nucleic acid solution contained in said containers (153, 154, 155, 156, 157); and a temperature controller (159) configured to control the temperature of said nucleic acid solution.

5. The molecular computer according to claim 2, **characterized in that** said control command generating section (14a) comprises:

an operational procedure generating section (14a) configured to convert said function included in said program into reaction procedures for said molecule based on a function-operational reaction conversion table in which said function is associated with operational reaction of molecules; and
a control command procedure generating section (14a) configured to convert said reaction procedures into control command procedures based on an operational reaction-control command conversion table in which operational reaction of molecules is associated with a driven operation of said reaction control section (22).

6. The molecular computer according to claim 2, **characterized in that** said control command generating section (14a) converts said function into said control command based on a data table in which at least one control command of said reaction control section (22) is associated with said function.

7. The molecular computer according to claim 2, **characterized in that** said reaction control section (22) comprises a plurality of reaction control elements (152, 153, 154, 155, 156, 157, 159, 160), and wherein said control command generating section (14a) sets element identification data to be associated with said control command, the element identification data identifying reaction control elements (152, 153, 154, 155, 156, 157, 159, 160) targeted for driving.

8. The molecular computer according to claim 2, **characterized in that** said reaction control section (22) comprises a plurality of reaction control elements (152, 153, 154, 155, 156, 157, 159, 160), and wherein said control command generating section (14a) has:

a temporary control command generating section (14a) which generates temporary control command procedures by associating element identification data for identifying said reaction control elements (152, 153, 154, 155, 156, 157, 159, 160) with reaction control elements (152, 153, 154, 155, 156, 157, 159, 160) targeted for driving; and
a restriction resolving command appending section (14a) configured to determine whether or not control in accordance with said temporary control command procedures is possible based on restriction conditions for said reaction control elements (152, 153, 154, 155, 156, 157, 159, 160), and generate said control command by adding a restriction resolving command for resolving said restriction to said temporary control command procedures if the determined result indicates that the control is not possible.

9. The molecular computer according to claim 2, **characterized by** further comprising: a detection result output section (20a, 20b) configured to output the detection result of chemical reaction of said molecules caused by reaction control of said chemical reaction.

10. The molecular computer according to claim 2, **characterized by** further comprising:

a detection result analysis section (14c) configured to convert the detection result of chemical reaction of said molecules caused by reaction control of said chemical reaction into a description format of said program; and
an analysis result output section (20a, 20b) which outputs the operation result of said detection result analysis section (14c).

11. The molecular computer according to claim 2, **characterized in that** said function is defined as a first function for selecting data which includes a specific sequence or a second function for selecting data which does not include a specific sequence.

12. A molecular computer according to claim 2, **characterized in that** said function is defined as a third function for appending a second specific sequence to a first specific sequence included in data.

13. The molecular computer according to claim 2, **characterized in that** said function is defined as a fourth function for acquiring a data set which includes plural items of data having a sequence, respectively.

14. The molecular computer according to claim 2, **characterized in that** said function is defined as a fifth function for dividing data having a plurality of sequences into plural items of data having a sequence.

15. The molecular computer according to claim 2, **characterized in that** said function is defined as a sixth function for dividing a specific sequence from said sequences or a seventh function for dividing from said sequence a second sequence distant from a first specific sequence by a specified distance.

16. The molecular computer according to claim 2, **characterized in that** said function is defined as an eighth function for acquiring a second specific sequence associated in advance with a first specific sequence included in sequences.

17. The molecular computer according to claim 2, **characterized in that** said function is defined as an ninth function for acquiring second data which includes a second specific sequence associated with first specific sequence, if there exists first data including said first specific sequence.

18. The molecular computer according to claim 2, **characterized in that** said function is defined as a tenth function for acquiring characteristics included in sequences.

19. The molecular computer according to claim 2, **characterized in that** said molecular operation section (22) comprises a synthesizing section (30) configured to synthesize a coding molecule.

20. The molecular computer according to claim 2, **characterized in that** said molecule is a nucleic acid.

21. A molecular operation plan-designing apparatus (21) for setting up a plan for molecular operation in which molecular operation is performed by chemical reaction of molecules, **characterized by** comprising:

   a control command generating section (14a) configured to convert a program described by variables, constants and functions into a series of control commands for driving a reaction control section (22) which performs reaction control of chemical reaction of molecules which correspond to operational reaction of the coding molecules, thereby generating control command procedures, wherein the variables and the constants being defined to be associated with coding molecules obtained by coding molecules based on nucleic acid sequences, and the functions being defined to be associated with operational reaction of the coding molecules; and
   an output section (20a, 20b, 23) configured to output the control command procedures.

22. A molecular computation method for performing molecular operation by chemical reaction of molecules, **characterized by** comprising:

   converting a program described by variables, constants and functions into a series of control commands for driving a reaction control section (22) which performs reaction control of chemical reaction of molecules which correspond to operational reaction of the coding molecules, thereby generating control command procedures, wherein the variables and the constants being defined to be associated with coding molecules obtained by coding molecules based on nucleic acid sequences, and the functions being defined to be associated with operational reaction of the coding molecules;
   outputting the control command procedures; and
   performing reaction control of chemical reaction of molecules based on the control command procedures.

23. The molecular computation method according to claim 22, **characterized in that** said reaction control sequentially outputs a drive signal which drives a plurality of reaction control elements (152, 153, 154, 155, 156, 157, 159, 160) to reaction control elements (152, 153, 154, 155, 156, 157, 159, 160) specified by the control command.

24. The molecular computation method according to claim 22, **characterized by** further comprising:

    detecting the reaction result of chemical reaction of molecules performed by said reaction control.

25. The molecular computation method according to claim 22, **characterized by** further comprising:

    detecting the reaction result of chemical reaction of molecules performed by said reaction control; and
    converting a description format of said program based on said detection result, thereby deriving the operation result of said program.

26. A molecular computation method integrally functioning an electrical operation section (21) and a molecular operation section (22) on the basis of molecular information recognizable by an electronic program.

27. A molecular computation program product causing a computer system to control execution of molecular operation caused by chemical reaction of molecules, **characterized by** comprising:

    a recording medium;
    first means recorded in said recording medium, the first means for assigning to said computer system a command for converting a program described by variables, constants and functions into a series of control commands for driving a reaction control section (22) which performs reaction control of chemical reaction of molecules which correspond to operational reaction of the coding molecules, thereby generating control command procedures, wherein the variables and the constants being defined to be associated with coding molecules obtained by coding molecules based on nucleic acid sequences, and the functions being defined to be associated with operational reaction of the coding molecules;
    second means recorded in said recording medium, the second means for assigning a command for outputting the control command procedures; and
    third means recorded in said recording medium, said third means for assigning to said computer system a command for receiving the detection result of chemical reaction of molecules performed by reaction control caused by said reaction control section (22), and converting the received result into a description format of said program, thereby deriving the operation result of said program.

28. A molecular computation program product causing a molecular computer which comprises an electronic operation section (21) and a molecular operation section (22) to perform molecular operation caused by chemical reaction of molecules, **characterized by** comprising:

    a recording medium; and
    means recorded in said recording medium, the means being applied to said electronic operation section (21) and/or said molecular operation section (22), the means for assigning to said each operation section (21, 22) a command for initiating a computational work caused by said electronic operation section (21) and a computational work caused by said molecular operation section (22) in an information format which can be electrically recognized by said each operation section (21, 22).

29. A molecular operation result analysis program product for assigning a command to an electronic operation section (21) which assigns a command for a molecular operation section (22) to assign a command for performing molecular operation caused by chemical reaction of molecules, **characterized by** comprising:

    a recording medium; and
    means recorded in said recording medium, the means for assigning to said electronic operation section (21) a command for converting infomation computed by said molecular operation section (22) into an information format so as to conform with an electronic program of said electronic operation section (21).

30. A molecular operation result analysis program product for assigning a command to an electronic operation section (21) which assigns a command for a molecular operation section (22) to assign a command for performing molecular operation caused by chemical reaction of molecules, said program product **characterized by** comprising:

    a recording medium; and

means recorded in said recording medium, the means for assigning to said electronic operation section (21) a command for converting the information computed by said electronic operation section (21) so as to conform with a computational work of said molecular operation section (22).

**31.** A molecular computation program causing a computer system to control execution of molecular operation caused by chemical reaction of molecules, the molecular computation program causing said computer system to function as:

first means for assigning to said computer system a command for converting a program described by variables, constants and functions into a series of control commands for driving a reaction control section (22) which performs reaction control of chemical reaction of molecules which correspond to operational reaction of the coding molecules, thereby generating control command procedures, wherein the variables and the constants being defined to be associated with coding molecules obtained by coding molecules based on nucleic acid sequences, and the functions being defined to be associated with operational reaction of the coding molecules; second means recorded in said recording medium, the second means for assigning a command for outputting the control command procedures to said computer system; and

third means recorded in said recording medium, the third means for assigning to said computer system a command for receiving the detection result of chemical reaction of molecules performed by reaction control caused by said reaction control section (22), and converting the received result into a description format of said program, thereby deriving the operation result of said program.

**32.** A molecular computation program causing a molecular computer which comprises an electronic operation section (21) and a molecular operation section (22) to perform molecular operation caused by chemical reaction of molecules, the molecular computation program causing said electronic operation section (21) to function as:

means recorded in said recording medium, the means being applied to said electronic operation section (21) and/or said molecular operation section (22), the means for assigning to said each operation section (21, 22) a command for starting a computational work caused by said electronic operation section (21) and a computational work caused by said molecular operation section (22) in an information format which can be electrically recognized by said each operation section (21, 22).

**33.** A molecular operation result analysis program causing a molecular computer which comprises an electronic operation section (21) and a molecular operation section (22) to perform molecular operation caused by chemical reaction of molecules, the molecular computation program causing said electronic operation section (21) to function as:

means for assigning to said electronic operation section (21) a command for converting information computed by said molecular operation section (22) so as to conform with an electronic program of said electronic operation section (21).

**34.** A molecular computation program causing a molecular computer which comprises an electronic operation section (21) and a molecular operation section (22) to perform molecular operation caused by chemical reaction of molecules, the molecular computation program causing said electronic operation section (21) to function as:

means for assigning to said electronic operation section (21) a command for converting information computed by said electronic operation section (21) in an information format so as to conform with a computational work of said molecular operation section (22).

**35.** A method of processing information by using an operational nucleic acid, **characterized by** comprising

(a) converting arbitrary information into a nucleic acid molecule;
(b) hybridizing the nucleic acid molecule obtained in said (a) to an operational nucleic acid designed so as to express a logical equation indicating a condition to be detected, and extending the nucleic acid molecule hybridized; and
(c) detecting a binding profile of the nucleic acid molecule included in the nucleic acid molecule extended in said (b), thereby evaluating whether a solution of the logical equation is true or false.

**36.** The method of processing information according to claim 35, **characterized in that** said nucleic acid molecule is from an orthonormal set of nucleic acid molecules.

37. The method of processing information according to claim 35, **characterized in that** said operational nucleic acid molecule is configured of a plurality of sequence units, a sequence of each of the sequence units and the arrangement of the sequence units can be designed in accordance with the logical equation, and the truth or falsehood of the logical equation is evaluated based on the binding of the nucleic acid molecule to each unit and extension thereof.

38. The method of processing information according to claim 35, **characterized in that** said operational nucleic acid is configured of a plurality of sequence units and a marker binding portion, the sequence of each of the sequence units and the arrangement of the sequence units can be designed in accordance with the logical equation, when said nucleic acid molecule binds to one of the units and is extended so that a marker does not bind to the marker binding portion, determination of the truth or falsehood of the logical equation is made whether or not a marker binds to the marker binding portion.

39. The method of processing information according to claim 35, **characterized in that** said operational nucleic acid is configured of a plurality of sequence units and a marker binding portion, a sequence of each of the sequence units and the arrangement of the sequence units can be designed in accordance with the logical equation which is formulated on the basis of the combination of presence and absence of a set of target nucleic acid molecules, when said nucleic acid molecule binds to one of the units and is extended so that a marker does not bind the marker binding portion, determination of truth or falsehood of the logical equation is made whether or not a marker binds to the marker binding portion.

40. A method of processing information using an operational nucleic acid, **characterized by** comprising

   (a) selecting target sequences, and further selecting "presence" or "absence" of the target sequences as a condition, formulating a logical equation based on the selected sequences and combination of the presence or absence of the target sequences selected, and designing and preparing an operational nucleic acid molecule in accordance with the logical equation;
   (b) when the target sequence selected in said (a), is present, information "the target sequence is present" being converted into a "presence molecule", whereas, when the target sequence is absent, information "the target sequence is absent" being converted into an absence molecule;
   (c) hybridizing a presence/absence oligonucleotide previously prepared on the basis of the condition selected in said (a)with the presence molecule obtained in said (b) and extending the presence molecule;
   (d) after step (c), recovering a single-stranded presence/absence oligonucleotide which has failed in forming a double strand because a desired information is absent;
   (e) hybridizing the absence molecule to the presence/absence oligonucleotide recovered in (d), thereby extracting the absence molecule;
   (f) hybridizing the presence molecule and absence molecule extracted in said (b) and (e), respectively, to the operational nucleic acid prepared in said (a) and expending the presence molecule and absence molecule; and
   (g) detecting binding profiles of the presence molecule and the absence molecule in the extended molecule obtained in said (f), thereby evaluating the truth or falsehood of a solution of the logical equation.

41. The method of processing information according to claim 40, **characterized in that** said presence molecule and said absence molecule are from a set of orthonormal nucleic acid molecules.

42. The method of processing information according to claim 40, **characterized in that** said operational nucleic acid molecule is configured of a plurality of sequence units, a sequence of each of the sequence units and the arrangement of the sequence units can be designed in accordance with the logical equation, and the truth or falsehood of the logical equation is evaluated based on the binding of the nucleic acid molecule to each unit and extension thereof.

43. The method of processing information according to claim 40, **characterized in that** said operational nucleic acid is configured of a plurality of sequence units and a marker binding portion, a sequence of each of the sequence units and the arrangement of the sequence units can be designed in accordance with the logical equation, when said nucleic acid molecule binds to one of the units and is extended so that a marker does not bind to the marker binding portion, and determination of the truth or falsehood of the logical equation is made whether or not a marker binds to the marker binding portion.

**44.** The method of processing information according to claim 40, **characterized in that** said operational nucleic acid molecule is configured of a plurality of sequence units and a marker binding portion, a sequence of each of the sequence units and the arrangement of the sequence units can be designed in accordance with the logical equation which is formulated on the basis of the combination of presence and absence of a set of target nucleic acid molecules, when said nucleic acid molecule binds to one of the units and is extended so that a marker does not bind to the marker binding portion, determination of the truth or falsehood of the logical equation is made whether or not a marker binds to the marker binding portion.

**45.** The method of processing information according to claim 40, **characterized in that** said molecule is a nucleic acid molecule.

**46.** A method of processing information using an operational nucleic acid for evaluating a logical OR or logical AND which corresponds to the presence or absence of the nucleic acid molecule having a specific sequence or using an operational nucleic acid molecule for evaluating a logical OR and a logical AND.

FIG. 1

S1 — Input source program

S2a — Perform processing for conversion into sequential program

S2b — Generate operational procedure table

S2c — Generate performing procedure table

S2

S3 — Calculate nucleic acid sequence

S4 — Synthesize nucleic acids

S5 — Generate control command procedure table

S6 — Perform automatic calculation at molecular operation section

S7 — Detect calculation result

S8 — Analyze detection result

S9 — Output analysis result

F I G. 2A

S1 — Input source program

S2a — Perform processing for conversion into sequential program

S2b — Generate operational procedure table

S2c — Generate performing procedure table

S2

S3 — Calculate nucleic acid sequence

S4 — Synthesize nucleic acids

S5 — Generate control command procedure table

S6 — Perform automatic calculation at molecular operation section

S7 — Detect calculation result

S8 — Analyze detection result

S9 — Output analysis result

S11 — Determine program to be performed next based on determination result of divergence processing

S10 — Determine divergence processing based on analysis result

F I G. 2B

S1 — Input source program

S2a — Perform processing for conversion into sequential program

S2b — Generate operational procedure table

S2c — Generate performing procedure table

S2

S3 — Calculate nucleic acid sequence

S4 — Synthesize nucleic acids

S5 — Generate control command procedure table

S6 — Perform automatic calculation at molecular operation section

S7 — Detect calculation result

S8 — Analyze detection result

S9 — Output analysis result

S12 — Determine program to be performed next based on determination result of divergence processing

S10 — Determine divergence processing based on analysis result

F I G. 2C

S1 — Input source program

S2a — Perform processing for conversion into sequential program

S2b — Generate operational procedure table

S2c — Generate performing procedure table

S2

S3 — Calculate nucleic acid sequence

S4 — Synthesize nucleic acids

S5 — Generate control command procedure table

S6 — Perform automatic calculation at molecular operation section

S7 — Detect calculation result

S9 — Output analysis result

F I G. 2D

S1 — Input source program

S2a — Perform processing for conversion into sequential program

S2b — Generate operational procedure table

S2c — Generate performing procedure table

S2

S5 — Generate control command procedure table

S6 — Perform automatic calculation at molecular operation section

S7 — Detect calculation result

S8 — Analyze detection result

S9 — Output analysis result

FIG. 2E

S1 — Input source program

S2a — Perform processing for conversion into sequential program

S2b — Generate operational procedure table

S2c — Generate performing procedure table

S2

S3 — Calculate nucleic acid sequence

S4 — Synthesize nucleic acids

S5 — Generate control command procedure table

S61 — Perform manual calculation at molecular operation section (perform operation)

S7 — Detect calculation result

S8 — Analyze detection result

S9 — Output analysis result

F I G. 2F

EP 1 215 623 A2

Configuration of apparatus

**Electronic operation section**

- Display section — 20a
- Input section — 11
- Input/output control section — 12
- Detection result analysis section — 14c
- Translation / operation design planning section — 14a
- Input/output control section — 12
- Printer — 20b
- Nucleic acid sequence operation section — 14b
- Storage section — 13
- Communication section — 23

21

Nucleic acid synthesis apparatus — 30

Nucleic acid container

Conveying

**Molecular operation section** — 22

- Communication section — 24
- Automatic control section — 151
- Conveying mechanism — 160
- XYZ control pipette — 152
- Detection section — 158
- Thermal cycler reactor — 153
- Bead container — 154
- Enzyme container — 155
- Temperature control means — 159
- Buffer solution container — 156
- Nucleic acid container — 157

F I G. 3

50

Source program

↓

First conversion processing
(conversion into sequential
program) — S2a

↓

Sequential processing program

S2b ⟍

Data          Procedure or function

Second conversion
processing

Data-coding molecule
association processing

Procedure function-
operational reaction
conversion processing

Translation
processing

Coding
molecule
reference
table

S3

Operational reaction
procedure table

Procedure function-
operational reaction
conversion
table

Calculate nucleic
acid sequence

S4

S2c

Synthesize
nucleic acids

Third conversion processing
(operational reaction-execution
operation conversion)

Operational reaction-
execution operation
conversion table

Nucleic acid
container
identification
information

Performing procedure table

S5

Control command
generation processing

Apparatus
restriction
condition data

Control command
procedure table

Apparatus
data

FIG. 4

| Procedure or function | Operational reaction |
|---|---|
| get (T,s) | Acquire DNA molecule which includes partial sequence "s" from inside of test tube T. |
| get (T,-s) | Acquire DNA molecule which does not includes partial sequence "s" from inside of test tube T. |
| append (T,s,e) | Append sequence "s" at end of ending condition "e" contained in test tube T. |
| ⋮ | ⋮ |

## F I G. 5

| Operational procedure No. | Operational procedure |
|---|---|
| ⋮ | ⋮ |
| 21 | Acquire coding molecule "a1" which includes partial sequence "s1" from inside of test tube T1. |
| 22 | Append sequence "s2" to end of coding molecule "a2" which meets ending condition "e" contained in test tube T1. |
| ⋮ | ⋮ |

## F I G. 6

| Operational procedure No. | Performing procedure No. | Performing procedure |
|---|---|---|
| ... | ... | ... |
| 31 | 102 | Aspirate nucleic acid solution "s1" from nucleic acid container T1 by XY control pipette. |
| | 103 | Transfer the aspirated nucleic acid solution "s1" to reactor Tα, and inject the solution. |
| | 104 | Aspirate nucleic acid solution "s2" from nucleic acid container T2 by XY control pipette. |
| 32 | 105 | Transfer the aspirated nucleic acid solution "s2" to reactor Tα, and inject the solution. |
| ... | ... | ... |

F I G. 7

| Operational procedure No. | Performing procedure No. | Control command No. | Control command procedures | Control target |
|---|---|---|---|---|
| ... | ... | ... | ... | ... |
| 31 | 102 | 203 | Aspirate nucleic acid solution "s1" from nucleic acid container 157a by XY control pipette 152a. | Pipette 152a |
| | 103 | 204 | Transfer the aspirated nucleic acid solution "s1" to reactor 153a, and inject the solution. | Pipette 152a |
| | | 205 | Alarm addition of reactor. | Alarm |
| | | 206 | Detect addition of reactor. | Detector |
| 32 | 104 | 207 | Aspirate nucleic acid solution "s2" from nucleic acid container 157b by XY control pipette 152b. | Pipette 152b |
| | 105 | 208 | Transfer the aspirated nucleic acid solution "s2" to reactor 153a, and inject the solution. | Pipette 152b |
| ... | ... | ... | ... | ... |

F I G. 8

F I G. 9

F I G. 10

append(T,s,e)

annealing
and
ligation

immobilization
and
cold wash

hot wash

FIG. 11

amplify (T,T$_1$,T$_2$···T$_n$)

annealing

PCR

immobilization
and
cold wash

hot wash
and
divide

T$_1$,T$_2$···T$_n$

FIG. 12

FIG. 13

detect (T$_n$)
Solution representing DNA

$X_2$T    $X_4$T

$X_1$T    $X_3$T

graduated PCR
Graduated PCR primer pair

$(X_1^T, \overline{X_2^T})$  $(X_1^T, \overline{X_2^F})$  $(X_1^T, \overline{X_3^T})$  $(X_1^T, \overline{X_3^F})$
$(X_1^T, \overline{X_4^T})$  $(X_1^T, \overline{X_4^F})$

$(X_1^F, \overline{X_2^T})$  $(X_1^F, \overline{X_2^F})$  $(X_1^F, \overline{X_3^T})$  $(X_1^F, \overline{X_3^F})$
$(X_1^F, \overline{X_4^T})$  $(X_1^F, \overline{X_4^F})$

PCR products of primers

$(X_1^T, \overline{X_2^T})$

$(X_1^T, \overline{X_3^T})$

$(X_1^T, \overline{X_4^T})$

FIG. 15

Sequencing method

· Sequencing

· Graduated PCR : Method of checking values in two variation
regions of DNA molecule

[Example of graduatde PCR]

Primer        Amplification

$X_1$        $X_3$

4 sets of primers

$X_1$=1    $X_3$=1      ○

$X_1$=1    $X_3$=0      ×

$X_1$=0    $X_3$=1      ○

$X_1$=0    $X_3$=1      ×

1        1

0        1

Two types of oligomers
are present

Start

$T_2 = \{X_1^T X_2^T, X_1^F X_2^T, X_1^T X_2^F, X_1^F X_2^F\}$

$k=3$

$\text{amplify} = (T_{k-1}, X_w^T, X_w^F)$

$j=1$

$W_j = ?$

$W_j = \neg X_k$

$W_j = X_k$

$\text{getuvsat} = \{T_w^T, u_j, v_j\}$

$\text{getuvsat} = (T_w^F, u_j, v_j)$

$j=j+1$

$j > 10$    No    Yes

$T^T = \text{append}(T_w^T, X_k^T, X_{k-1}^{T/F})$

$T^F = \text{append}(T_w^F, X_k^F, X_{k-1}^{T/F})$

$T_k = \text{merge}(T^T, T^F)$

$k=k+1$

$k > 4$    No    Yes

$\text{detect}(T_4)$

Finish

FIG. 14

F I G. 16

FIG. 17A

FIG. 17B

FIG. 17C

FIG. 17D

FIG. 17E

FIG. 17F

FIG. 17G

FIG. 17H

FIG. 17I

| | | D0 | | | | | | | | | |
|---|---|---|---|---|---|---|---|---|---|---|---|
| | | D0-1 | D0-2 | D0-3 | D0-4 | D0-5 | D0-6 | D0-7 | D0-8 | D0-9 | D0-10 |
| D1 | D1-1 | 1 | | | | | | | | | |
| | D1-2 | | | | | | | | | | |
| | D1-3 | | | | | | | | | | |
| | D1-4 | | | | | | | | | | |
| | D1-5 | | | | | | | | | | |
| | D1-6 | | | | | | | | | | |
| | D1-7 | | | | | | | | | | |
| | D1-8 | | | | | | | | | | |
| | D1-9 | | | | | | | | | | |
| | D1-10 | | | | | | | | | | |

F I G. 18A

Probe region

DNA capillary

F I G. 18B

F I G. 19

F I G. 20

F I G. 21

F I G. 22

FIG. 23

FIG. 24

FIG. 25

FIG. 26

FIG. 27

FIG. 28

FIG. 29

FIG. 30

FIG. 31

FIG. 32

FIG. 33

FIG. 34

FIG. 35

$DCN_k^*$   $DCN_k$

$\overline{SD}$   $\overline{DCN_k^*}$   $\overline{ED}$

7

FIG. 36

1

SD

7

$\overline{ED}$   2

FIG. 37

FIG. 38

$DCN_k^*$

FIG. 39

$DCN_k^*$

$\overline{DCN_k^*}$   6

$DCN_k^*$   S

Complementary sequence
to the 3' end of $DCN_k^*$   9   Complementary sequence
to the 5' end of S

FIG. 40